# EUROPÄISCHE PATENTSCHRIFT

(11) **EP 2 578 818 B1**
(45) Veröffentlichungstag und Bekanntmachung des Hinweises auf die Patenterteilung: **23.09.2015**
(21) Anmeldenummer: 12187544.7
(22) Anmeldetag: 05.10.2012
(51) Int. Cl.: F01L 1/344, F15B 13/04, F15B 21/04

(54) **Steuerventil mit integriertem Filter und Nockenwellen-Phasensteller mit dem Steuerventil**
Control valve with integrated filter and cam shaft phase adjuster with the control valve
Soupape de commande avec filtre intégré et régulateur de phase d'arbres à came avec la soupape de commande

(30) Priorität: 05.10.2011 DE 102011084059
(43) Veröffentlichungstag der Anmeldung: 10.04.2013
(73) Patentinhaber: Schwäbische Hüttenwerke Automotive GmbH, 73433 Aalen-Wasseralfingen (DE)
(72) Erfinder: Bohner, Jürgen, 88339 Bad Waldsee (DE); Krüger, Jens, 88427 Bad Schussenried (DE); Meinig, Uwe, 88348 Bad Saulgau (DE)
(74) Vertreter: Schwabe - Sandmair - Marx

(56) Entgegenhaltungen:
- EP-A1- 1 767 749
- WO-A1-95/21332
- DE-A1-102004 036 096
- DE-A1-102005 037 480
- DE-B3-102009 006 445

## Beschreibung

Die Erfindung betrifft ein Steuerventil mit einer Filtereinrichtung. Gegenstand der Erfindung ist das Steuerventil als solches und auch in Kombination mit einem mittels des Steuerventils steuerbaren oder regelbaren fluidischen Aggregat, beispielsweise einem Nockenwellen-Phasensteller oder einer im Fördervolumen verstellbaren Pumpe. Insbesondere kann das Steuerventil Bestandteil eines mit Druckfluid zu betreibenden Nockenwellen-Phasenstellers zur Verstellung der Drehwinkelposition einer Nockenwelle relativ zu einer Kurbelwelle einer Brennkraftmaschine sein. Ein besonderer Aspekt ist eine Verbesserung bezüglich der Filtereinrichtung für das Druckfluid.

Zur Erhöhung von Leistung und Drehmoment, aber auch zur Reduzierung des Kraftstoffverbrauchs und der Abgasschadstoffemissionen von Verbrennungsmotoren für Straßenfahrzeuge haben Nockenwellen-Phasensteller zur Variation der Einlass- und auch Auslasssteuerzeiten Verbreitung gefunden. Aufgrund der hohen Zuverlässigkeit, aber auch im Hinblick auf eine günstige Kosten-Nutzen-Relation haben sich hydraulische, durch das Schmieröl für die Brennkraftmaschine betätigte Phasensteller nach dem Prinzip des hydraulischen Schwenkmotors bewährt. Verschärfte Anforderungen an den Kraftstoffverbrauch und die Schadstoffemissionen erfordern hohe Stellgeschwindigkeiten. Ferner werden für den Phasensteller eine kompakte, platzsparende Bauweise und ein niedriger Preis gefordert. Gleichzeitig soll ein einwandfreier Betrieb mit hoher Zuverlässigkeit gewährleistet sein.

Den Forderungen nach hoher Stellgeschwindigkeit und kompakter Bauweise kommen Phasensteller mit einem zentralen Steuerventil entgegen. Um bei möglichst kleinen Abmessungen und geringen Leckageverlusten die Betriebssicherheit zu gewährleisten, wird das der Verstellung des Phasenstellers dienende Druckfluid, in den meisten Anwendungen das Schmieröl für die Brennkraftmaschine, stromauf vom Phasensteller, in möglichst großer Nähe zum Phasenstellers mittels Filter gereinigt. Im Hinblick auf die Betriebssicherheit ist es ferner bekannt, im Druckfluidzulauf des Phasenstellers ein Sperrorgan, beispielsweise ein Rückschlagventil, anzuordnen und dadurch zu verhindern, dass sich eine oder mehrere Stellkammer(n) des Phasenstellers im Falle eines in der oder den Stellkammer(n) im Vergleich zu einer das Druckfluid zuführenden Druckfluidversorgung herrschenden Überdrucks in Richtung auf die stromaufwärtige Druckfluidversorgung entleeren kann oder können. Bei einem Phasensteller kann solch ein Überdruck aufgrund des Schleppmoment der Nockenwelle auftreten.

Nach der JP 09-280019 A ist im Zulauf des Druckfluids zum Phasensteller innerhalb der Nockenwelle unmittelbar stromauf vom Phasensteller eine Filtereinrichtung angeordnet. Ein Nachteil dieser Lösung ist, dass auf Seiten der Nockenwelle Bauraum für die Filtereinrichtung geschaffen und die Filtereinrichtung in einem eigenen Montageschritt in die Nockenwelle eingesetzt werden muss.

Aus der DE 10 2005 052 481 A1 ist ein Phasensteller bekannt, der ein zentrales Steuerventil mit einer integrierten Filtereinrichtung und einem integrierten Rückschlagventil umfasst. Das Steuerventil weist ein in Bezug auf die Drehachse der Nockenwelle axial angeordnetes Ventilgehäuse mit einem Ventileinlass, Steueranschlüssen und einem radialen Ventilauslass auf. Im Ventilgehäuse ist ein Ventilkolben axial beweglich aufgenommen. In einer ersten Variante ist die Filtereinrichtung im Ventileinlass angeordnet. Das Druckfluid strömt radial durch den Ventileinlass und die Filtereinrichtung in das Innere des Ventilgehäuses, wo es das Rückschlagventil axial anströmt und am Rückschlagventil vorbei in radialer Richtung in einen im Ventilgehäuse axial erstreckten Kanal strömt, von dem aus es nach radial einwärts zum äußeren Umfang des Ventilkolbens, über den äußeren Umfang des Ventilkolbens zu einem der Steueranschlüsse und über den betreffenden Steueranschluss zu zugeordneten Stellkammern des Phasenstellers strömt. Von anderen Stellkammern abströmendes Druckfluid wird über den anderen der Steueranschlüsse in und durch den Ventilkolben zum Ventilauslass geleitet. In einer zweiten Variante ist die Filtereinrichtung nicht im radialen Ventileinlass, sondern in einem sich daran anschließenden axialen Abschnitt des Ventilgehäuses stromauf vom Rückschlagventil angeordnet. In beiden Varianten steht entweder nur ein kleiner Filterquerschnitt für die Reinigung des Druckfluids zur Verfügung oder wird zusätzlicher Bauraum für die Anordnung der Filtereinrichtung benötigt.

Eine Filtereinrichtung, die das Druckfluid im radialen Zulauf reinigt, ist auch aus der DE 10 2009 048 753 A1 bekannt. Die Filtereinrichtung ist dort als separat zu montierender Filterring gebildet.

Um ein mit der Filtereinrichtung der DE 10 2005 052 481 A1 einhergehendes erhöhtes Spänerisiko zu vermindern, schlägt die DE 10 2008 006 179 A1 vor, das Ventilgehäuse dreischichtig aufzubauen. Ein Filtergewebe umgibt einen äußeren Umfang einer inneren Führungshülse. Dieser zweischichtige Hülsenkörper ist außen mit Kunststoff umspritzt. Das Filtergewebe erstreckt sich axial durch radiale Steueranschlüsse des dreischichtigen Ventilgehäuses. Auch bei dieser Lösung ist die Größe des Filterquerschnitts begrenzt, da als Filterquerschnitt nur der Querschnitt des jeweiligen Steueranschlusses zur Verfügung steht, den das Druckfluid auf dem Weg zu den Druckkammern durchströmt. Zudem erhöht der dreischichtige Aufbau des Ventilgehäuses den Herstellaufwand und den Preis des Steuerventils.

Phasensteller mit zentralen Steuerventilen und in den Steuerventilen integrierten Rückschlagventilen sind ferner aus der US 6 971 353 B2 und der US 7 533 695 B2 bekannt. Die US 7 533 695 B2 erwähnt, dass optional auch eine Filtereinrichtung im Steuerventil integriert sein kann.

Die DE 10 2005 037 480 A1 und die DE 10 2004 036 096 A1 betrifft ein Steuerventil mit einem Ventilgehäuse und einem im Ventilgehäuse verschieblich gelagerten Steuerkolben. Ein Filter ist innerhalb des Steuerkolbens kraftschlüssig fixiert und so angeordnet, dass von dem Druckanschluss in den Steuerkolben einströmendes Druckmittel durch den Filter geleitet wird, um eventuelle im Druckmittel vorhandene Verunreinigungen effektiv von den Steuerkanten des Steuerkolbens fernzuhalten.

Die WO 95/21332 A1 betrifft ein Steuerventil mit einem Ventilgehäuse und einem Steuerkolben, der innerhalb des Steuergehäuses linear beweglich gelagert ist. Der Steuerkolben weist einen zentralen axialen Durchgang auf, in dem eine Filterpatrone angeordnet und über zwei Drosselscheiben fest mit dem Steuerkolben verbunden, so dass in den Steuerkolben einfließendes Öl von eventuellen Verunreinigungen gereinigt wird.

Es ist eine Aufgabe der Erfindung, ein Steuerventil zu schaffen, das eine Filtereinrichtung zur Reinigung des Druckfluids als integrierten Bestandteil aufweist und bei niedrigem Durchflusswiderstand eine erhöhte Reinigungswirkung hat. Das Steuerventil soll für das Steuern oder Regeln eines fluidisch, vorzugsweise hydraulisch betreibbaren Aggregats wie etwa eines Nockenwellen-Phasenstellers oder einer regelbaren Pumpe geeignet sein.

Das Steuerventil weist ein Ventilgehäuse und einen im Ventilgehäuse längs einer Bewegungsachse und in diesem Sinne axial beweglichen Ventilkolben auf. Das Ventilgehäuse weist einen vorzugsweise axialen Ventileinlass für das Druckfluid und wenigstens einen Steueranschluss, vorzugsweise mehrere Steueranschlüsse, sowie einen Ventilauslass auf. Der Steueranschluss oder die mehreren Steueranschlüsse dienen der Verbindung des Steuerventils mit einer oder mehreren Stellkammer(n) eines fluidisch betreibbaren Aggregats, beispielsweise eines Fluidik-Stellglieds, das mittels des Steuerventils gesteuert oder geregelt werden soll. Bei dem Fluidik-Aggregat kann es sich insbesondere um einen Nockenwellen-Phasensteller handeln. Das Steuerventil ist auf solch eine bevorzugte Verwendung jedoch nicht beschränkt, sondern kann auch zum Steuern oder Regeln eines anderen fluidisch, vorzugsweise hydraulisch betriebenen Aggregats dienen, beispielsweise einer im Fördervolumen verstellbaren Pumpe wie etwa einer Schmierölpumpe zur Versorgung einer Brennkraftmaschine eines Kraftfahrzeugs oder eines Fahrzeugs generell oder auch einer stationär angeordneten Brennkraftmaschine mit Schmieröl. Darüber hinaus sind aber auch andere Anwendungen denkbar, in denen ein Aggregat mittels eines Steuerventils gesteuert oder geregelt betrieben werden soll.

Der Ventilkolben ist hohl. Er weist einen inneren Hohlraum auf, durch den das Druckfluid vom Ventileinlass über einen Kolbenauslass mit einem oder mehreren Durchlässen des Ventilkolbens zu dem oder den Steueranschlüssen strömen kann. Einer kompakten und somit platzsparenden, gleichwohl konstruktiv einfachen Bauweise des Ventils und der Forderung nach hohen Stellgeschwindigkeiten kommt es entgegen, wenn der Ventilkolben einen Kolbeneinlass aufweist, der sich axial, vorzugsweise in axialer Flucht zum bevorzugt ebenfalls axialen Ventileinlass erstreckt. Diesbezüglich vorteilhafte Steuerventile werden beispielsweise in der DE 10 2010 002 713 A1 und der DE 10 2011 004 539 im Zusammenhang mit Nockenwellen-Phasenstellern offenbart. Mit dieser Bauweise des Steuerventils, insbesondere der axial fluchtenden Anordnung von Ventileinlass und Kolbeneinlass, gehen vorteilhaft niedrige Drosselverluste bei der Durchströmung des Steuerventils einher, wodurch die Stellgeschwindigkeit gegenüber anderen Ventilbauweisen gesteigert werden kann.

Integrierter Bestandteil des Steuerventils ist eine im Steuerventil angeordnete Filtereinrichtung mit einem Filterquerschnitt, bei dessen Durchströmung das Druckfluid gefiltert wird. Als Filterquerschnitt wird eine Fläche verstanden, genauer gesagt ein Strömungsquerschnitt, durch den das Druckfluid strömen muss, um vom Ventileinlass bei Durchströmung der Filtereinrichtung zu den Steueranschlüssen zu gelangen. Unter dem Begriff "Filterquerschnitt" wird beispielsweise nicht die Oberfläche eines Filtermaterials, etwa eines Filtergewebes, verstanden, sondern eine Querschnittsfläche bzw. ein Strömungsquerschnitt, den das Druckfluid durchströmen muss und in dem ein das Druckfluid bei der Durchströmung reinigendes Filtermaterial mit einer wirksamen Filterfläche angeordnet ist, die deutlich größer als die Filterquerschnittsfläche sein kann. Bildet beispielsweise eine vollständig mit Filtermaterial gefüllte Zylinderhülse die Filtereinrichtung, und weist die Hülse einen undurchlässigen Mantel auf, so dass Druckfluid nur axial durch die so gebildete Filtereinrichtung strömt, ist die Innenquerschnittsfläche des Mantels der Filterquerschnitt. Bildet beispielsweise ein durchlässiges Filtergewebe den Mantel, ist die gesamte Umfangsfläche ein Filterquerschnitt im Sinne der Erfindung. Die Ausführungen zu einem Nockenwellen-Phasensteller gelten auch für andere Anwendungen, in denen ein zu steuerndes oder regelndes Aggregat Stellkammern aufweist, an die das Steuerventil mit seinen bevorzugt wenigstens zwei Steueranschlüssen angeschlossen werden kann oder ist.

Nach der Erfindung befindet sich zumindest ein Teil, vorzugsweise zumindest ein überwiegender Teil des Filterquerschnitts im Hohlraum des Ventilkolbens. Der vom Druckfluid zu durchströmende Kolbenhohlraum wird somit für die Reinigung des Druckfluids nutzbar gemacht. Durch diese Bauweise kann der Filterquerschnitt gegenüber den bekannten Lösungen vergrößert werden. Die Filtereinrichtung erfordert keinen zusätzlichen Bauraum oder allenfalls einen vernachlässigbar kleinen zusätzlichen Bauraum für eine Abstützung der Filtereinrichtung. Insbesondere kann ein im Vergleich zu den bekannten Lösungen großer Filterquerschnitt ohne axiale Verlängerung oder ohne nennenswerte axiale Verlängerung des Steuerventils verwirklicht werden. Das durch den Ventileinlass in das Steuerventil strömende Druckfluid strömt innerhalb des Ventilkolbens durch den zumindest teilweise im Kolbenhohlraum befindlichen Filterquerschnitt und durch einen oder mehrere Durchlässe des Ventilkolbens zu den Steueranschlüssen des Ventilgehäuses und von dort entsprechend dem Schaltzustand des Steuerventils in die Frühstellkammer(n) oder Spätstellkammer(n). Mit der Erfindung ist als Vorteil auch verbunden, dass die Filtereinrichtung geschützt untergebracht ist.

Das Steuerventil ist in bevorzugter Anwendung Bestandteil eines Phasenstellers zur Verstellung der Drehwinkelposition einer Nockenwelle relativ zu einer Kurbelwelle einer Brennkraftmaschine. Der Phasensteller umfasst einen von der Kurbelwelle drehantreibbaren Stator, einen vom Stator um eine Drehachse drehantreibbaren Rotor und ein Steuerventil. Der Stator kann insbesondere für einen Zugmittelantrieb durch die Kurbelwelle, beispielsweise mittels einer Kette oder eines Zahnriemens, eingerichtet sein und für derartige Ausführungen ein Antriebsrad, wie etwa ein Kettenrad oder Zahnriemenrad oder auch ein Stirnrad für einen Drehantrieb über ein Zahnradgetriebe aufweisen. Der Rotor ist mit der Nockenwelle gekoppelt oder koppelbar. Er kann insbesondere drehmomentfest mit der Nockenwelle verbunden, vorzugsweise an einem Stirnende der Nockenwelle angeordnet oder für eine drehmomentfeste Verbindung mit der Nockenwelle eingerichtet sein. Als drehmomentfeste Verbindung versteht die Erfindung solche Verbindungen, die Drehbewegungen der so miteinander verbundenen Komponenten relativ zueinander nicht erlauben, indem die betreffenden Komponenten beispielsweise in einem Stück geformt oder entsprechend fest miteinander gefügt sind. Im Falle einer drehmomentfesten Verbindung von Rotor und Nockenwelle ist die Drehachse der Nockenwelle im montierten Zustand des Phasenstellers somit auch die Drehachse des Rotors. Der Stator und der Rotor bilden miteinander Stellkammern, nämlich wenigstens eine Frühstellkammer und wenigstens eine Spätstellkammer. Die Stellkammern sind mit einem Druckfluid beaufschlagbar, um den Rotor relativ zum Stator um die Drehachse verstellen zu können. Eine Druckbeaufschlagung der Frühstellkammer(n) und Druckentlastung der Spätstellkammer(n) erzeugt ein auf den Rotor relativ zum Stator in Richtung Voreilung wirkendes Drehmoment. Eine Druckbeaufschlagung der Spätstellkammer(n) und Druckentlastung der Frühstellkammer(n) erzeugt ein auf den Rotor relativ zum Stator in Richtung Nacheilung wirkendes Drehmoment. Das Steuerventil dient dem Steuern des Druckfluids. Insbesondere wird mit dem Steuerventil bestimmt, ob die Frühstellkammer(n) oder die Spätstellkammer(n) mit dem Druckfluid beaufschlagt oder vom Druckfluid entlastet wird oder werden.

Das Steuerventil kann beispielsweise in einem Anbaugehäuse oder Deckel für den Phasensteller nahe bei der Anordnung aus Rotor und Stator angeordnet sein, etwa wie in der EP 1 985 813 A2 offenbart. Es kann aber auch abgerückt von der Rotor-Stator-Anordnung oder für sich am Maschinengehäuse, beispielsweise am Zylinderkopf oder Zylinderkopfdeckel angeordnet sein. Besonders bevorzugt erstreckt sich das Ventilgehäuse aber axial im Rotor. Handelt es sich bei dem Steuerventil wie bevorzugt um ein Zentralventil, fallen die Drehachse des Rotors und die Bewegungsachse des Ventilkolbens zusammen. Das Ventilgehäuse weist einen vorzugsweise axialen Ventileinlass für das Druckfluid, mit den Stellkammern verbundene Steueranschlüsse und einen Ventilauslass auf. Von den wenigstens zwei Steueranschlüssen ist einer mit der oder den Frühstellkammer(n) und der andere mit der oder den Spätstellkammer(n) verbunden. Das über den Ventileinlass in das Steuerventil einströmende Druckfluid gelangt somit über den jeweiligen Steueranschluss zu der oder den zugeordneten Stellkammer(n) oder gelangt aus der oder den jeweiligen Stellkammer(n) über den zugeordneten Steueranschluss bei Druckentlastung zum Ventilauslass.

In bevorzugten Ausführungen weist die Filtereinrichtung eine im Hohlraum des Ventilkolbens erstreckte Filterhüllstruktur, die einen Filterinnenraum umgibt, und einen Filtereinlass in den Filterinnenraum auf. Der Filterquerschnitt bildet zumindest einen Teil, vorzugsweise zumindest einen überwiegenden Teil der den Filterinnenraum umgebenden Hüllfläche der Filterhüllstruktur. Das Druckfluid gelangt durch den Filtereinlass in den Filterinnenraum und aus dem Filterinnenraum durch den Filterquerschnitt, d. h. den mit Filtermaterial belegten Teil der Hüllfläche der Filterhüllstruktur, zu den Steueranschlüssen des Ventilgehäuses.

Die Filterhüllstruktur kann beispielsweise sphäroid, wie etwa halbkugelförmig, vom Ventileinlass weg in den Hohlraum des Ventilkolbens hinein ausgebaucht sein, bevorzugter ist sie jedoch langgestreckt. Sie kann sich in Richtung auf ein im Hohlraum des Ventilkolbens gelegenes Filterende in einem oder mehreren diskreten Schritten, beispielsweise treppenförmig, oder aber kontinuierlich, beispielsweise konisch, parabolisch oder andersartig mit sich ändernder Krümmung erweitern oder bevorzugter verjüngen. Sie kann insbesondere einen axial erstreckten Mantel, beispielsweise einen kreiszylindrischen Mantel oder einen im Querschnitt ovalen, polygonalen oder gewellten Mantel und einen vom Filtereinlass axial beabstandeten Boden aufweisen. Der Filterquerschnitt bildet zumindest einen Teil, vorzugsweise zumindest einen überwiegenden Teil der Fläche des Bodens oder einen Teil, vorzugsweise zumindest einen überwiegenden Teil der zwischen dem Filtereinlass und dem Boden befindlichen Fläche des Mantels. Das Wort "oder" wird hier wie auch sonst stets von der Erfindung im üblichen logischen Sinne eines "inklusiv oder" verstanden, umfasst also sowohl die Bedeutung von "entweder ... oder" als auch die Bedeutung von "und", soweit sich aus dem jeweils konkreten Zusammenhang nicht ergibt, dass ausschließlich nur eine dieser beiden Bedeutungen umfasst sein soll. Bezogen auf das Merkmal, wonach der Filterquerschnitt zumindest einen Teil des Bodens oder zumindest einen Teil des Mantels bildet, bedeutet dies, dass der Filterquerschnitt in einer ersten Variante zumindest einen Teil nur des Bodens, nicht aber des Mantels bildet, in einer zweiten Variante zumindest einen Teil nur des Mantels, aber nicht des Bodens bildet und in einer dritten Variante zumindest einen Teil des Mantels und zumindest einen Teil des Bodens bildet. Von diesen drei Varianten werden die zweite und die dritte Variante bevorzugt, da der Filterquerschnitt gegenüber der ersten Variante vergrößert werden kann. Der Mantel kann wie gesagt zylindrisch sein oder sich in Richtung auf den Boden verjüngen. Der Innenquerschnitt kann sich in Längsrichtung nach Größe oder Form auch anders ändern. Der Boden kann eine Wölbung aufweisen, insbesondere nach außen gewölbt sein, in bevorzugten einfachen Ausführungen ist der Boden jedoch zumindest im Wesentlichen plan.

Vorzugsweise bildet eine axiale Filteröffnung den Filtereinlass, so dass das Druckfluid axial in die Filtereinrichtung und in den bevorzugten Ausführungen in den von der Filterhüllstruktur umgebenen Filterinnenraum einströmen kann. Die Filteröffnung bzw. der Filtereinlass kann insbesondere an einem axialen Ende der Filtereinrichtung angeordnet sein. Um die Filtereinrichtung mit möglichst geringem Strömungswiderstand zu verwirklichen, kann eine axial erstreckte Filterhüllstruktur an ihrem stromaufwärtigen axialen Ende über ihre gesamte oder nahezu gesamte Stirnfläche in Ausbildung des Filtereinlasses offen sein, so dass der gesamte stromaufwärtige Innenquerschnitt der Filterhüllstruktur als Filtereinlass zur Verfügung steht.

Besonders bevorzugt sind der Ventileinlass, der Filtereinlass und der Kolbeneinlass axial in einer Flucht angeordnet. Solch eine Ausgestaltung trägt dazu bei, den Strömungswiderstand des Strömungsabschnitts, der sich vom Ventileinlass bis zum Filterquerschnitt erstreckt, so gering wie möglich zu halten. Ist das Steuerventil wie bevorzugt Bestandteil eines Nockenwellen-Phasenstellers, und erstreckt sich das Ventilgehäuse ferner wie ebenfalls bevorzugt axial im Rotor des Phasenstellers, so sind der Ventileinlass, der Filtereinlass und der Kolbeneinlass vorzugsweise auf der Drehachse des Rotors angeordnet.

Ist der Ventilkolben wie bevorzugt gegen die rückstellende Kraft einer Ventilfeder beweglich, kann die Ventilfeder an der Filtereinrichtung abgestützt sein oder sich über die Filtereinrichtung entweder am Ventilgehäuse oder am Ventilkolben abstützen. Die Filtereinrichtung kann eine Stützstruktur für die Abstützung der Ventilfeder oder ihre eigene Abstützung am Ventilgehäuse oder Ventilkolben aufweisen. In bevorzugten einfachen Ausführungen ist die Ventilfeder der Funktion nach eine Druckfeder, die sich zur Erzeugung der axial auf den Ventilkolben wirkenden Federkraft mit einem Federende am Ventilkolben und dem anderen Federende an der Stützstruktur der Filtereinrichtung abstützt.

Die Filtereinrichtung ist in erfindungsgemäßen Ausführungen an dem Ventilgehäuse abgestützt und ragt von der Abstützung aus in den Ventilkolben hinein. In nicht beanspruchten Ausführungen ist die Filtereinrichtung an dem Ventilkolben abgestützt, so dass sie dessen axiale Bewegungen mitmacht. In den nicht beanspruchten Ausführungen kann sie von ihrer Abstützung am Ventilkolben aus gesehen in den Innenraum des Ventilkolbens ragen, falls sie außerhalb des Hohlraums am Kolben abgestützt ist. Sie kann stattdessen aber auch im Hohlraum des Ventilkolbens abgestützt sein, so dass sie sich in derartigen Varianten vollständig im Innenraum des Ventilkolbens erstreckt. Ist die Filtereinrichtung an dem Ventilgehäuse abgestützt, ragt die Filtereinrichtung vorzugsweise zumindest mit einem überwiegenden Teil ihrer axialen Länge in den Innenraum des Filterkolbens hinein.

Die Abstützung am Ventilgehäuse, hat den Vorteil, dass der durch die Filtereinrichtung beim Durchströmen des Filterquerschnitts zu überwindende Durchflusswiderstand keine Axialkraft auf den Kolben ausübt. In den nicht beanspruchten Ausführungen mit Abstützung am Ventilkolben erzeugt das Druckfluid beim Durchströmen der Filtereinrichtung eine auf den Ventilkolben wirkende axiale Kraft, die von der Größe des Durchflusswiderstands der Filtereinrichtung abhängt. Diese Axialkraft kann außerhalb der Filtereinrichtung kompensiert werden, beispielsweise in Fortführung der Lehre der DE 10 2010 002 713 A1 durch entsprechende Bemessung einer mit dem Druckfluid beaufschlagbaren Stirnfläche des Kolbens. In Ausführungen wird die mit dem Strömungswiderstand einhergehende Axialkraft durch die Filtereinrichtung selbst zumindest teilweise kompensiert. In derartigen Ausführungen kann die Filtereinrichtung eine nach außen in Richtung auf eine Umfangsinnenfläche des Ventilkolbens abragende Dichtung aufweisen, die den Hohlraum des Ventilkolbens in einen mit den Steueranschlüssen verbundenen ersten Teilraum und einen durch die Dichtung von den Steueranschlüssen getrennten zweiten Teilraum unterteilt. Ferner ist ein Teil des Filterquerschnitts so angeordnet, dass ein Teil des durch die Filtereinrichtung strömenden Druckfluids in den zweiten Teilraum strömt und ein Druck, der sich bei Durchströmung der Filtereinrichtung im zweiten Teilraum einstellt, auf die Dichtung und dadurch auf die Filtereinrichtung wirkt. Der im zweiten Teilraum wirkende Druck erzeugt über die Dichtung eine auf die Filtereinrichtung wirkende Axialkraft, die der durch den Durchflusswiderstand der Filtereinrichtung erzeugten Axialkraft entgegenwirkt und diese zumindest teilweise kompensiert. Aus dem zweiten Teilraum kann Druckfluid auch zurück in die Filtereinrichtung gedrückt werden. Dieser Rückspüleffekt kann eine Reinigung der Filtereinrichtung bewirken. Bevorzugt muss das in den zweiten Teilraum gelangende Druckfluid zwar wie geschildert einen Teil des Filterquerschnitts durchströmen, grundsätzlich kann mittels der Dichtung aber auch eine Axialkraftkompensation erzielt werden, wenn das Druckfluid durch einen einfachen Durchgang der Filtereinrichtung, also ungefiltert, in den zweiten Teilraum gelangt. Bevorzugt wird jedoch auch dieser Teil des Druckfluids mittels der Filtereinrichtung gereinigt, die hierfür den genannten Teil des Filterquerschnitts im Strömungsweg zum zweiten Teilraum aufweist.

Der Filterquerschnitt kann von einem Gewebe, Geflecht oder Vlies gebildet werden. Auch ein offenporiger Schaumstoff oder ein offenporiges Sintermaterial sind ein zur Bildung des Filterquerschnitts geeignetes Filtermaterial. Der Filterquerschnitt kann überall vom gleichen Filtermaterial in gleicher Dicke oder auch in variierender Dicke gebildet werden. Grundsätzlich ist auch denkbar, den Filterquerschnitt durch eine Kombination unterschiedlicher Filtermaterialien zu bilden, beispielsweise aus einer Kombination von zwei, drei oder noch mehr der genannten unterschiedlichen Filtermaterialien. Es können unterschiedliche Filtermechanismen wie beispielsweise eine Oberflächenfiltration mittels eines Filtergewebes oder stattdessen oder zusätzlich eine Tiefenfiltration mittels eines Filtervlieses verwirklicht werden. Der Filterquerschnitt ist zweckmäßigerweise so gebildet, dass im Druckfluid enthaltene Partikel mit einer Größe von 200 µm oder mehr durch die Filtereinrichtung zurückgehalten werden. Bevorzugt ist der Filterquerschnitt so gebildet, dass auch Partikel mit Partikelgrößen unter 200 µm zurückgehalten werden. Eine Abscheidung von Partikeln mit einer Partikelgröße von 80 µm oder mehr wird bevorzugt. Entsprechend kann bei Wahl eines Filtergewebes oder Filtergeflechts die Maschenweite solch eines Filtermaterials in bevorzugten Ausführungen 200 µm oder weniger betragen. Ein guter Kompromiss zwischen möglichst feiner Abscheidung und Robustheit der Filtereinrichtung ist eine Maschenweite von 100 bis 180 µm.

Um die Funktion des mittels des Steuerventils zu steuernden oder zu regelnden Aggregats, beispielsweise Phasenstellers, selbst für den hypothetischen Fall einer durch allmähliche Verschmutzung verursachten Verstopfung der Filtereinrichtung zu gewährleisten, kann der Ventilkolben oder vorzugsweise die Filtereinrichtung mit einer Berststruktur oder einer zerstörungsfrei öffnenden Bypass-Einrichtung, wie etwa einer Klappe oder einem andersartigen Rückschlagventil, ausgestattet sein. Wird ein durch die Berststruktur oder die bis zum Erreichen dieses Zustands geschlossene Bypass-Einrichtung vorgegebener Höchstdruck überschritten, reißt oder platzt die Berststruktur oder öffnet die Bypass-Einrichtung, so dass das Druckfluid unter Umgehung des Filterquerschnitts zu den Steueranschlüssen gelangen kann.

In Weiterbildungen weist das Steuerventil als integrierten Bestandteil nicht nur die Filtereinrichtung, sondern auch ein Sperrorgan auf, das insbesondere als einfaches Rückschlagventil gebildet sein kann. Das Sperrorgan dient der Verhinderung einer Rückströmung des Druckfluids von einem der Steueranschlüsse oder dem in entsprechenden Ventilbauformen nur einen einzigen Steueranschluss zum und durch den Ventileinlass. Bevorzugt ist das Sperrorgan auf dem Strömungsweg des Druckfluids zwischen dem Ventileinlass und der Filtereinrichtung angeordnet, d. h. die Filtereinrichtung ist stromabwärts vom Sperrorgan angeordnet. Das Sperrorgan kann einen Sperrkörper, einen Sperrkörpersitz und eine Feder aufweisen, die den Sperrkörper mit Federkraft in den Sperrkörpersitz drückt. Das Sperrorgan ist vorzugsweise im Bereich des Ventileinlasses angeordnet. Ein vom Sperrkörpersitz umgebener Durchlass des Sperrorgans kann insbesondere unmittelbar vom Ventilgehäuse gebildet werden, so dass die Anzahl der zur Verwirklichung des Sperrorgans benötigten Teile reduziert und der Einbau dieser Teile vereinfacht werden kann. Das Sperrorgan ist in den bevorzugten Ausführungen in einem Hohlraum des Ventilgehäuses aufgenommen. Die Feder des Sperrorgans kann sich unmittelbar am Ventilgehäuse oder aber an einer am Ventilgehäuse abgestützten, vorzugsweise in das Ventilgehäuse eingesetzten Stützstruktur abstützen.

Das Sperrorgan und die Filtereinrichtung können vorteilhafterweise axial hintereinander, insbesondere in einer axialen Flucht angeordnet sein, um den Strömungswiderstand gering zu halten.

Die Filtereinrichtung und das Sperrorgan können separat voneinander abgestützt sein. Sie können in anderen Ausführungen aber auch axial unmittelbar aneinander stoßen, so dass das Sperrorgan axial an der Stützstruktur der Filtereinrichtung oder die Filtereinrichtung axial an der Stützstruktur des Sperrorgans abgestützt ist. So kann eine der Stützstrukturen in einem Innenraum des Ventilgehäuses mit dem Ventilgehäuse axial unbeweglich gefügt sein und die andere mittels Federkraft axial gegen die gefügte Stützstruktur gedrückt werden, die Stützstruktur der Filtereinrichtung beispielsweise durch die Federkraft der auf den Ventilkolben wirkenden Ventilfeder gegen eine Stützstruktur des Sperrorgans gedrückt werden. Einem losen Druckkontakt der Stützstrukturen werden allerdings Ausführungen vorgezogen, in denen die Stützstrukturen stoffschlüssig, kraftschlüssig oder formschlüssig fest miteinander verbunden sind, beispielsweise mittels Schweißverbindung, Klebeverbindung, Rastverbindung oder Klemm- oder Pressverbindung. Die beiden Stützstrukturen können auch von einem als Einheit geformten Teil gebildet werden. Die Zusammenfassung der beiden Stützstrukturen zu einer gefügten oder von vornherein einteilig geformten Einheit reduziert die Anzahl der Teile und vereinfacht den Einbau in das Steuerventil.

Die Stützstruktur der Filtereinrichtung kann in Doppelfunktion die Stützstruktur des Sperrorgans bilden. Die Stützstruktur der Filtereinrichtung kann die vorstehend im Zusammenhang mit dem Sperrkörper genannte Feder abstützen oder eine Führung für den Sperrkörper bilden.

Der Integrationsgrad kann noch gesteigert werden, indem die Filtereinrichtung und das Sperrorgan nahezu am gleichen Ort angeordnet oder in einer baulichen Einheit vereinigt werden. So kann das Sperrorgan beispielsweise in der genannten Filterhüllstruktur angeordnet sein. Das Sperrorgan kann die Filterhüllstruktur auch außen ganz oder nur bereichsweise überdecken und ist in derartigen Varianten stromabwärts von der Filtereinrichtung gebildet. So kann der Filterquerschnitt beispielsweise von einer undurchlässigen Sperrstruktur des Sperrorgans überdeckt sein, die ein oder mehrere zungenartige(s) Sperrelement(e) aufweist, das oder die jeweils gegen eine elastische Rückstellkraft von der Filterhüllstruktur abgebogen werden kann oder können, wobei das Abbiegen und damit einhergehend die Freigabe des Filterquerschnitts durch das Druckfluid bewirkt wird. Das oder die zungenartige(n), abbiegbare(n) Flächenbereich(e) bzw. Sperrelement(e) der Sperrstruktur des Sperrorgans kann oder können jeweils in der Art eines Reed-Ventils geformt sein und entsprechend wirken. Die Anordnung des Sperrorgans in der Filtereinrichtung oder außen überdeckend kann einhergehen mit einer integrierten bzw. vereinigten Bauweise von Filtereinrichtung und Sperrorgan, das Sperrorgan kann aber in derartigen Ausführungen auch als separate Komponente ausgeführt sein.

Die vorliegende Anmeldung ist auf die integrierte Filtereinrichtung gerichtet. Es sei jedoch darauf hingewiesen, dass im Zusammenhang mit diesem Erfindungsgedanken beschriebene weitere Erfindungsgedanken auch ohne diesen Grundgedanken mit Vorteil zur Anwendung gelangen können. Die Anmelderin behält es sich beispielsweise vor, auf eine Vorrichtung gemäß den Merkmalen (a) und (b) oder (a) bis (c) des Anspruchs 1 eine eigene Anmeldung zu richten, die die Anordnung oder Bauweise des Sperrorgans betrifft. Eine Filtereinrichtung als integrierter Bestandteil des Steuerventils, vorzugsweise entsprechend den Merkmalen (c) und (d), ist eine optionale, obgleich bevorzugte Weiterbildung eines Steuerventils mit integriertem Sperrorgan. Eine Vorrichtung, nämlich ein Steuerventil oder ein Aggregat mit Steuerventil, das die Merkmale (a) und (b) oder die Merkmale (a) bis (c) des Anspruchs 1 und das oder die anderen Merkmale dieses Anspruchs nur optional aufweist, kann beispielsweise die genannte Berststruktur oder Bypass-Einrichtung oder eine Filtereinrichtung mit plastisch verformbaren Kontaktelementen aufweisen.

Vorteilhafte Merkmale werden auch in den Unteransprüchen und deren Kombinationen offenbart.

Nachfolgend werden Ausführungsbeispiele der Erfindung anhand von Figuren erläutert. An den Ausführungsbeispielen offenbar werdende Merkmale bilden jeweils einzeln und in jeder Merkmalskombination die Gegenstände der Ansprüche und auch die vorstehend beschriebenen Ausgestaltungen vorteilhaft weiter. Es zeigen:
- Figur 1: einen montierten Nockenwellen-Phasensteller mit einem Stator, einem Rotor und mit einem Steuerventil in einem ersten Ausführungsbeispiel,
- Figur 2: eine den Stator, den Rotor und das Steuerventil des ersten Ausführungsbeispiels umfassende Montageeinheit,
- Figur 3: die Montageeinheit in einem Querschnitt A-A,
- Figur 4: das Steuerventil des ersten Ausführungsbeispiels,
- Figur 5: das Steuerventil des ersten Ausführungsbeispiels in einem Querschnitt B-B,
- Figur 6: ein Steuerventil in einem zweiten Ausführungsbeispiel,
- Figur 7: ein Steuerventil in einem dritten Ausführungsbeispiel,
- Figur 8: ein Steuerventil in einem vierten Ausführungsbeispiel
- Figur 9: ein Steuerventil in einem fünften Ausführungsbeispiel
- Figur 10: ein Steuerventil in einem sechsten Ausführungsbeispiel
- Figur 11: ein Steuerventil in einem siebten Ausführungsbeispiel, in dem eine Filtereinrichtung und ein Sperrorgan zu einer Baueinheit vereinigt sind,
- Figur 12: die Baueinheit aus Filtereinrichtung und Sperrorgan,
- Figur 13: ein Steuerventil in einem nicht beanspruchten Ausführungsbeispiel,
- Figur 14: ein Steuerventil in einem nicht beanspruchten Ausführungsbeispiel,
- Figur 15: eine Filtereinrichtung in einer ersten perspektivischen Sicht,
- Figur 16: die Filtereinrichtung der Figur 15 in einer zweiten perspektivischen Sicht und
- Figur 17: ein Steuerventil in einem nicht beanspruchten Ausführungsbeispiel.

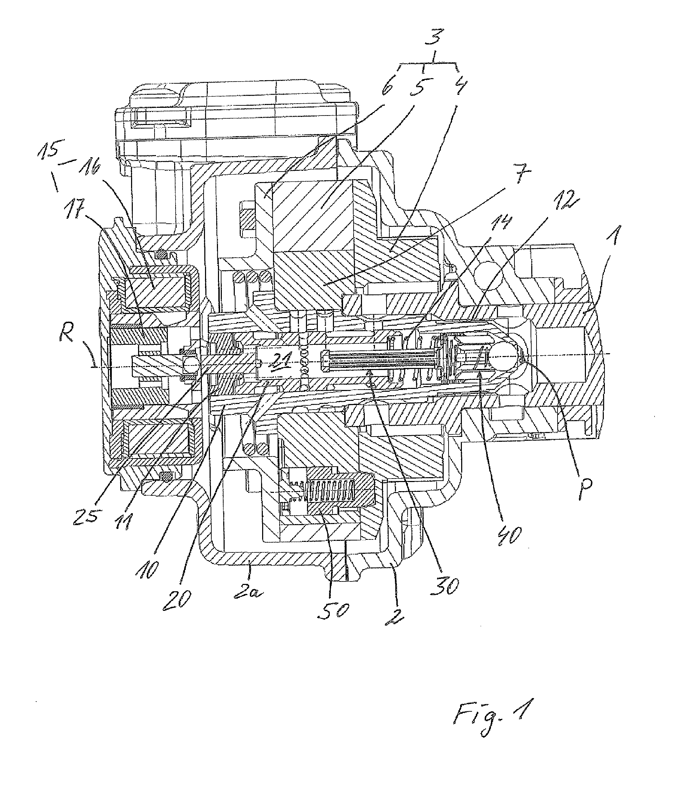

Figur 1 zeigt einen Nockenwellen-Phasensteller in einem Längsschnitt. Der Nockenwellen-Phasensteller ist an einem stirnseitigen Ende einer Nockenwelle 1 angeordnet und dient der Verstellung der Phasenlage, also der Drehwinkelposition der Nockenwelle 1 relativ zu einer Kurbelwelle einer Brennkraftmaschine, beispielsweise eines Antriebsmotors eines Kraftfahrzeugs. Die Nockenwelle 1 ist um eine Drehachse R drehbar an einem Maschinengehäuse 2 der Brennkraftmaschine gelagert, beispielsweise an einem Zylinderkopf und mit einem Zylinderkopfdeckel abgedeckelt.

Der Nockenwellen-Phasensteller umfasst einen Stator 3, der von der Kurbelwelle drehangetrieben werden kann, und einen Rotor 7, der drehfest mit der Nockenwelle 1 verbunden ist. Der Stator 3 setzt sich aus einem Antriebsrad 4, beispielsweise ein Kettenrad, einem Deckel 6 und einem axial zwischen dem Antriebsrad 4 und dem Deckel 6 angeordneten Flügelrad 5 zusammen. Das Antriebsrad 4, das Flügelrad 5 und der Deckel 6 sind drehfest miteinander verbunden. Der Zusammenbau des Stators 3 ist nur beispielhaft. Der Stator 3 kann alternativ auch aus mehr oder anstatt aus den drei Teilen 4, 5 und 6 auch aus nur zwei Teilen gefügt sein, etwa aus einem einstückigen Teil 4, 5 und dem Teil 6 oder aber dem Teil 4 und einem einstückigen Teil 5, 6. Grundsätzlich kann er auch in einem einzigen Stück urgeformt werden. Das Antriebsrad 4 kann am Flügelrad 5 außen umlaufend geformt und der Deckelbereich des Antriebsrads 4, der die Stator-Rotor-Anordnung seitlich abdichtet, Bestandteil des Rotors 7 sein. Zusätzlich zu dem oder statt des vom Antriebsrad 4 gebildeten Deckelbereichs kann der Deckel 6 Bestandteil des Rotors 7 sein. Der Stator 3 und der Rotor 7 bilden einen hydraulischen Schwenkmotor nach dem Flügelzellenprinzip.

Der Nockenwellen-Phasensteller weist ein in Bezug auf die Stator-Rotor-Anordnung 3, 7 zentral angeordnetes Steuerventil mit einem Ventilgehäuse 10 und einem im Ventilgehäuse 10 axial hin und her verstellbar angeordneten Ventilkolben 20 auf. Das Ventilgehäuse 10 weist einen Verbindungsabschnitt 12 auf, in dem es mit der Nockenwelle 1 fest verbunden ist. Wie bevorzugt, aber nur beispielhaft, ragt das Ventilgehäuse 10 in eine am stirnseitigen Ende der Nockenwelle 1 geformte Aufnahme und ist in der Aufnahme mit der Nockenwelle verschraubt, d.h. der Verbindungsabschnitt 12 ist ein Außengewinde. Das Ventilgehäuse 10 dient somit in Doppelfunktion auch als zentrales Befestigungsmittel für die drehmomentfeste Verbindung von Nockenwelle 1 und Rotor 7, indem es im montierten Zustand nach Herstellung der Fügeverbindung, im Beispiel eine Schraubverbindung, den Rotor 7 gegen die Stirnseite der Nockenwelle 1 presst,

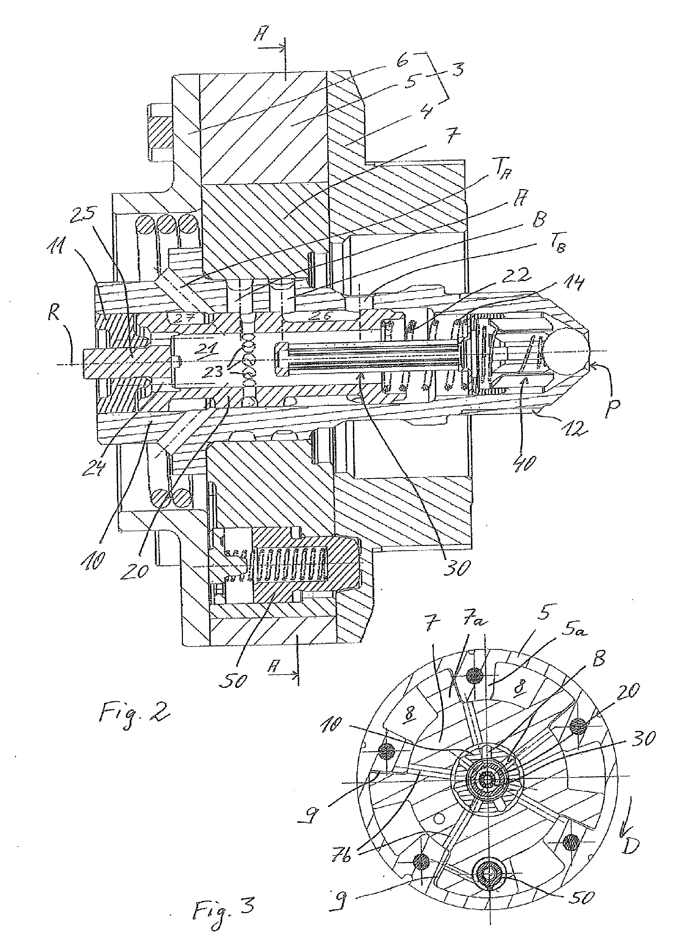

In Figur 2 ist der Phasensteller vor der Montage und ohne den das Stellglied 15 aufnehmenden Deckel 2a dargestellt. Die den Stator 3, den Rotor 7 und das Steuerventil umfassende, in Figur 2 abgebildete Montageeinheit kann an der Nockenwelle 1 einfach durch Herstellen der Fügeverbindung, im Beispiel der Schraubverbindung von Nockenwelle 1 und Verbindungsabschnitt 12 des Ventilgehäuses 10, montiert werden.

Figur 3 zeigt die Montageeinheit im Querschnitt A-A der Figur 2. Das Flügelrad 5 bildet eine Außenkomponente und der Rotor 7 eine Innenkomponente des Schwenkmotors. Das hohle Flügelrad 5 weist an seinem inneren Umfang nach radial innen abragende Flügel 5a auf. Der Rotor 7 weist nach radial außen abragende Flügel 7a auf, die mit den Flügeln 5a des Stators 3 erste Stellkammern 8 und zweite Stellkammern 9 bilden. Die Stellkammern 8 sind in Umfangsrichtung jeweils zur einen Seite und die Stellkammern 9 jeweils zur anderen Seite der Flügel 7a des Rotors 7 angeordnet. Werden die Stellkammern 8 unter Druck gesetzt und die Stellkammern 9 entlastet, dreht der Rotor 7 relativ zum Stator 3 bzw. Flügelrad 5 in Figur 3 im Uhrzeigersinn bis maximal in die in Figur 3 eingenommene Endposition. Werden die Stellkammern 9 unter Druck gesetzt und die Stellkammern 8 im Druck entlastet, dreht der Rotor 7 relativ zum Stator 3 gegen den Uhrzeigersinn. Die relativ zum Stator 3 stattfindende Drehbewegung in die eine Drehrichtung entspricht einer Voreilung und die relative Drehbewegung in die andere Richtung einer Nacheilung der Nockenwelle 1 relativ zur Kurbelwelle.

Im Ausführungsbeispiel wird angenommen, dass der Stator 3 in Drehrichtung D angetrieben wird. Die Stellkammern 8 sind daher Frühstellkammern und die Stellkammern 9 Spätstellkammern. In Figur 3 nimmt der Rotor 7 relativ zum Stator 3 die Frühstellung ein, in der die Nockenwelle 1 relativ zu der Kurbelwelle voreilt. Werden die Spätstellkammern 9 mit dem Druckfluid beaufschlagt und die Frühstellkammern 8 entlastet, dreht der Rotor 7 in Richtung Nacheilung bis maximal in eine Spätstellung, In der Frühstellung wird der Rotor 7 mittels eines Verriegelungspins 50 verriegelt. Der Pin 50 kann durch Druckbeaufschlagung aus der eingeriegelten Position in eine Freigabeposition bewegt werden, um den Rotor 7 in Richtung auf die Spätstellung bewegen zu können. Zu diesem Zweck ist er fluidisch mit der nächstgelegenen Spätstellkammer 9 verbunden. Abgesehen von der Beaufschlagung aus einer der Spätstellkammern 9 entspricht der den Verriegelungspin 50 umfassende Verriegelungsmechanismus dem der DE 10 2011 004 539. Die Frühstellung und die Spätstellung werden jeweils durch einen Anschlagkontakt vorgegeben. In den beiden End- oder Extremstellungen ist jeweils wenigstens einer der Rotorflügel 7a in einem Anschlagkontakt mit einem der Statorflügel 5a. In bevorzugten Ausführungen kann der Rotor 7 nicht nur zwischen diesen beiden Drehwinkelendpositionen relativ zum Stator 3 hin und her drehverstellt werden, sondern durch entsprechende Druckbeaufschlagung sowohl der Frühstellkammern 8 als auch der Spätstellkammern 9 in einer beliebigen Zwischenposition hydraulisch fixiert werden.

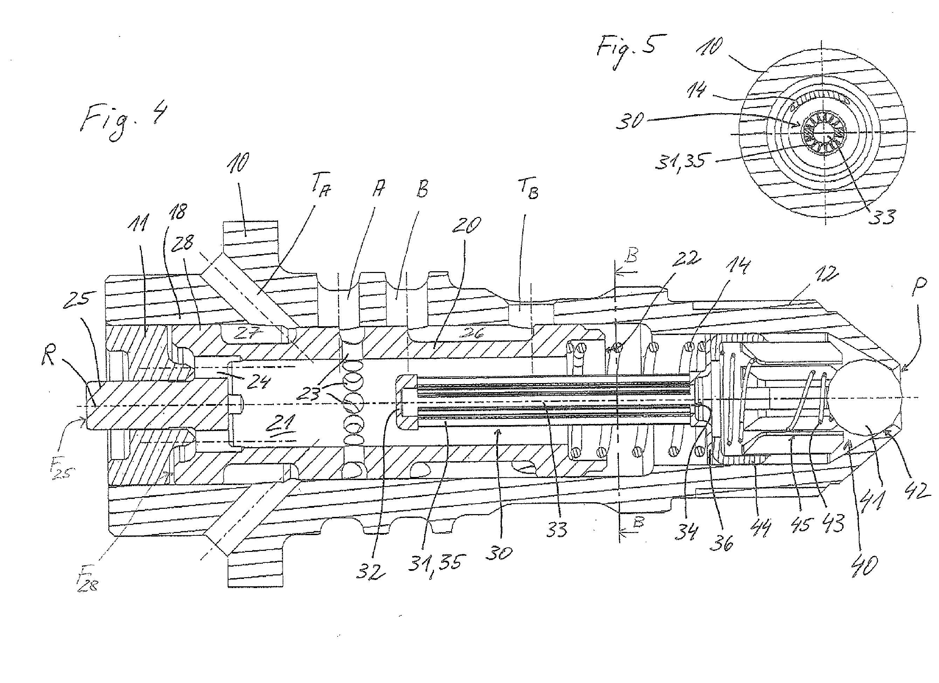

Figur 4 zeigt das Ventilgehäuse 10 mit dem Ventilkolben 20 und weiteren integrierten Komponenten des Steuerventils herausgelöst aus der Montageeinheit, also losgelöst von der Stator-Rotor-Anordnung 3, 7. Bei den integrierten Komponenten bzw. Bestandteilen des Steuerventils handelt es sich um eine Filtereinrichtung 30 und ein Sperrorgan 40, die mit dem Ventilgehäuse 10 und dem Ventilkolben 20 eine eigene Baueinheit bilden, die vormontiert durch einen zentralen Durchgang des Rotors 7 geschoben werden kann, um die Montageeinheit der Figur 2 zu bilden.

Der Ventilkolben 20 ist hohl mit einem axial erstreckten Hohlraum 21, der an einem axialen Ende des Ventilkolbens 20 offen ist und dort einen axialen Kolbeneinlass 22 bildet. Der Ventilkolben 20 weist ferner einen Kolbenauslass 23 auf, der radial durch einen den Hohlraum 21 umgebenden Mantel des Ventilkolbens 20 führt. Der Ventilkolben 20 weist an seinem vom Kolbeneinlass 22 abgewandten anderen axialen Ende ein Kopplungsorgan 25 für eine Kopplung mit einem Stellglied 15 auf (Figur 1), das die axiale Verstellung des Ventilkolbens 20 bewirkt. Das Kopplungsorgan 25 wirkt als Betätigungsstößel des Ventilkolbens 20. Das Kopplungsorgan 25 kann mit dem den Hohlraum 21 umgebenden Kolbenmantel in einem Stück geformt oder gegebenenfalls mit diesem axial fest gefügt sein. Es ragt an dem Stirnende des Ventilkolbens 20 ab, das dem Stellglied 15 axial zugewandt ist. Das Kopplungsorgan 25 durchragt eine Stirnverschlusswand 11 des Ventilgehäuses 10. Die Stirnverschlusswand 11 umgibt das Kopplungsorgan 25 in enger Passung und sorgt so trotz des hin und her beweglichen Kopplungsorgans 25 für einen fluiddichten Abschluss des Ventilgehäuses 10.

Das Stellglied 15 (Figur 1) ist ein elektromagnetisches Stellglied, im Ausführungsbeispiel ein Axialhub-Elektromagnet, mit einer bestrombaren Spule 16 und einem Anker 17. Die Spule 16 ist drehfest mit dem Maschinengehäuse 2 der Brennkraftmaschine verbunden. Im Ausführungsbeispiel ist die Spule 16 drehfest mit einem Deckel 2a verbunden, der am Maschinengehäuse 2 montiert ist. Der Anker 17 ist relativ zur Spule 16 axial beweglich. Er ist mit dem Kopplungsorgan 25 unmittelbar in einem Kopplungseingriff, der als axialer Druckkontakt gebildet ist. Bei Bestromung der Spule 16 wirkt auf den Anker 17 eine axial in Richtung auf das Kopplungsorgan 25 gerichtete Stellkraft, die im Kopplungseingriff, einem reinen axialen Druckkontakt, auf das Kopplungsorgan 25 und somit auf den Ventilkolben 20 wirkt. An der Trennstelle zwischen mit der Nockenwelle 1 im Betrieb drehendem Ventilkolben 20 und dem nicht drehenden Stellglied 15 herrscht vorzugsweise nur Punktberührung. Der Anker 17 weist an seinem das Kopplungsorgan 25 kontaktierenden Ende vorzugsweise eine Kugeloberfläche auf. Alternativ könnte das Kopplungsorgan 25 an seinem Stirnende eine kugelförmige Oberfläche aufweisen. In einer Weiterbildung ist das Kontaktende des Ankers 17 als Kugelgleitlager gebildet, indem dort eine Kugel in einer Pfanne des Ankers 17 frei sphärisch drehbar gelagert ist.

Das Steuerventil umfasst eine Ventilfeder 14, deren Federkraft der Stellkraft des Stellglieds 15 entgegenwirkt. Die Ventilfeder 14 ist am Ventilgehäuse 10 und in Richtung auf das Stellglied 15 am Ventilkolben 20 abgestützt. Das Stellglied 15 wird von einer Steuerung der Brennkraftmaschine angesteuert, nämlich bestromt. Die Ansteuerung erfolgt vorzugsweise über ein in einem Speicher der Maschinensteuerung abgelegtes Kennfeld, beispielsweise in Abhängigkeit von der Drehzahl der Kurbelwelle, der Last oder anderer bzw. weiterer für den Betrieb der Brennkraftmaschine relevanter Parameter.

Der Ventilkolben 20 ist in einem zentralen axialen Hohlraum des Ventilgehäuses 10 in der erläuterten Weise hin und her bewegbar angeordnet. Das Ventilgehäuse 10 weist an seinem dem Stellglied 15 abgewandten axialen Ende einen axial, zentral in den Gehäusehohlraum führenden Ventileinlass P auf, dem über die Nockenwelle 1 unter Druck stehendes Fluid zuführbar ist. Bei dem Fluid kann es sich insbesondere um ein der Schmierung der Brennkraftmaschine dienendes Schmieröl handeln, das auch zur Schmierung beispielsweise des Spurlagers der Nockenwelle 1 dient (Figur 1), so dass der Ventileinlass P an die Schmierölversorgung der Nockenwelle 1 angeschlossen ist. Dieses Druckfluid strömt durch den axialen Ventileinlass P in das Ventilgehäuse 10 und durch den zum Ventileinlass P in axialer Flucht liegenden Kolbeneinlass 22 in den Hohlraum 21. Vom Hohlraum 21 zweigt seitlich, beispielhaft wie bevorzugt in radialer Richtung, der Kolbenauslass 23 ab, durch den das Druckfluid in Abhängigkeit von der axialen Position des Ventilkolbens 20 entweder den Frühstellkammern 8 oder Spätstellkammern 9 zugeführt wird, um die Phasenlage des Rotors 7 relativ zum Stator 3 und somit die Phasenlage der Nockenwelle 1 relativ zur Kurbelwelle einzustellen. Der Kolbenauslass 23 wird von über den Umfang des Ventilkolbens 20 verteilt angeordneten radialen Durchgängen durch den Mantel des Ventilkolbens 20 gebildet. Der Kolbenauslass 23 ist in einem axial mittleren Abschnitt des Ventilkolbens 20 angeordnet.

Das Ventilgehäuse 10 weist durch seinen Mantel führende Anschlüsse für die Zu- und Abführung des Fluids zu und von den Stellkammern 8 und 9 auf, nämlich einen Steueranschluss A, einen Steueranschluss B und Ventilauslässe T_{A} und T_{B}. Die Anschlüsse A und B und auch die Auslässe T_{A} und T_{B} sind gerade Durchgänge durch den Mantel des Ventilgehäuses 10. Die Steueranschlüsse A und B erstrecken sich wie bevorzugt, aber nur beispielhaft auf kürzestem Wege radial durch den Mantel.

Die Figuren 1 und 2 zeigen den Ventilkolben 20 in einer ersten axialen Kolbenposition, in der ihn die Ventilfeder 14 hält. In der ersten Kolbenposition ist der Kolbenauslass 23 mit dem Steueranschluss A verbunden. Das über den Ventileinlass P zugeführte Druckfluid strömt in axialer Richtung durch den axialen Kolbeneinlass 22 in den Hohlraum 21 des Ventilkolbens 20 und von dort durch den abzweigenden Kolbenauslass 23 zu den Stellkammern 8, die dem Steueranschluss A zugeordnet sind. Die Stellkammern 9 sind über den Steueranschluss B und einen Ventilauslass T_{B} mit einem Reservoir verbunden und somit im Druck entlastet.

Am äußeren Umfang des Ventilkolbens 20 erstreckt sich über 360° umlaufend eine Vertiefung 26, die in der ersten Kolbenposition den Steueranschluss B mit dem Ventilauslass T_{B} verbindet. Von der Vertiefung 26 aus in axialer Richtung gesehen hinter dem Kolbenauslass 23 ist am äußeren Umfang des Ventilkolbens 20 eine weitere axial erstreckte Vertiefung 27 geformt, die sich ebenfalls über den äußeren Umfang des Ventilkolbens 20 umlaufend erstreckt. Die Vertiefung 27 ist in der ersten Kolbenposition mit dem Ventilauslass T_{A} verbunden. Der Ventilauslass T_{A} ist dem Steueranschluss A zugeordnet. Allerdings wird er in der ersten Kolbenposition durch einen zwischen dem Kolbenauslass 23 und der Vertiefung 27 geformten Dichtsteg des Ventilkolbens 20 von dem Steueranschluss A fluidisch getrennt.

Wird der Anker 17 durch entsprechende Bestromung des Stellglieds 15 mit einer die Federkraft der Ventilfeder 14 übersteigenden Stellkraft beaufschlagt, schiebt das Stellglied 15 den Ventilkolben 20 aus der dargestellten ersten Kolbenposition axial in Richtung auf den Ventileinlass P und bei entsprechend großer Stellkraft bis in eine axial zweite Kolbenposition, in der nicht mehr der Steueranschluss A, sondern der andere Steueranschluss B mit dem Kolbenauslass 23 verbunden ist. In der zweiten Kolbenposition trennt ein zwischen dem Kolbenauslass 23 und der Vertiefung 26 geformter Dichtsteg des Ventilkolbens 20 den Steueranschluss B vom zugeordneten Ventilauslass T_{B}, so dass in der zweiten Kolbenposition die Stellkammern 9 mit dem Druckfluid beaufschlagt werden. In der zweiten Kolbenposition verbindet ferner die Vertiefung 27 den Steueranschluss A mit dem Ventilauslass T_{A}, so dass das Fluid aus den Stellkammern 8 abströmen kann und diese im Druck entlastet werden. Der Rotor 7 bewegt sich dementsprechend in der Darstellung der Figur 3 gegen den Uhrzeigersinn relativ zum Flügelrad 5 und somit zum Stator 3 in Richtung auf die Spätstellung. Die drehfest mit dem Rotor 7 verbundene Nockenwelle 1 wird in ihrer Phasenlage relativ zur Kurbelwelle um den gleichen Drehwinkel verstellt.

Das durch den Ventileinlass P in das Steuerventil strömende Fluid der Hochdruckseite beaufschlagt den Ventilkolben 20 mit einer in Richtung auf das Stellglied 15 wirkenden ersten Axialkraft. Zur Kompensation dieser ersten Axialkraft ist der Ventilkolben 20 in Richtung auf das Stellglied 15 durchströmbar, so dass sich an seiner dem Stellglied 15 zugewandten Rückseite zwischen dieser Rückseite und der Stirnverschlusswand 11 ein Fluiddruck aufbaut, der auf die Rückseite des Ventilkolbens 20 eine Gegenkraft, eine zweite Axialkraft ausübt. Da die mit dem Druckfluid beaufschlagbare Projektionsfläche um die Querschnittsfläche F₂₅ verringert ist, mit der das Kopplungsorgan 25 durch die Stirnverschlusswand 11 ragt, wäre die axiale Gegenkraft, die zweite Axialkraft, entsprechend der Querschnittsfläche F₂₅ des Kopplungsorgans 25 geringer als die erste Axialkraft. Es entstünde ein resultierender Axialschub, der sich entsprechend der Differenz der Projektionsflächen in Abhängigkeit vom Druck des Fluids ändern würde. Die Kennlinie des Steuerventils würde sich entsprechend ändern, was zu erheblichen Verzerrungen führen kann, da der Druck des Fluids im Betrieb der Brennkraftmaschine schwanken kann.

Um die zweite Axialkraft zu vergrößern, weisen der Ventilkolben 20 einen radial aufgeweiteten Kolbenabschnitt 28, im Folgenden Aufweitung 28, und das Ventilgehäuse 10 einen angepasst aufgeweiteten Gehäuseabschnitt 18 auf, der die Aufweitung 28 in enger Passung umgibt. Soweit das Ventilgehäuse 10 und der Ventilkolben 20 dichtend zusammenwirken, weist der Ventilkolben 20 an seinem äußeren Umfang mit Ausnahme der Aufweitung 28 beispielhaft überall den gleichen zylindrischen Querschnitt auf. Um das Druckfluid an die Rückseite des Ventilkolbens 20 zu führen, weist der Ventilkolben 20 vom Kolbeneinlass 22 gesehen axial hinter dem Kolbenauslass 23 eine Zuführung 24 auf, die durch mehrere um die zentrale Achse R verteilte Durchgangskanäle in einem Ventilkolbenboden geformt ist. Die Aufweitung 28 und entsprechend der Gehäuseabschnitt 18 sind so bemessen, dass die durch die Aufweitung 28 erhaltende Vergrößerung der dem Stellglied 15 zugewandten Projektionsfläche F₂₈ zumindest einen überwiegenden Teil der für die Kompensation "verlorenen" Querschnittsfläche F₂₅ des Kopplungsorgans 25 ausgleicht. Die Kompensationsfläche ist eine äußere Ringfläche der Projektionsfläche F₂₈. Das Steuerventil kann hinsichtlich der Kompensation der Axialkraft dem Steuerventil der DE 10 2010 002 713 A1 entsprechen, insbesondere den dort beanspruchten Ausführungen.

Die Filtereinrichtung 30 erstreckt sich axial über einen Teil ihrer Länge im Ventilkolben 20. Sie ist zum Erhalt eines bei Durchströmung die Reinigung des Druckfluids bewirkenden Filterquerschnitts 35 als Hohlstruktur, d. h. als Filterhüllstruktur oder Filtertasche bzw. -korb gebildet. Die Filterhüllstruktur besteht aus einem Mantel 31, der im ersten Ausführungsbeispiel zylindrisch ist, und einem Boden 32, der ein im Hohlraum 21 des Ventilkolbens 20 gelegenes axiales Ende der Filterhüllstruktur bildet. Der Mantel 31 ist an seinem in Bezug auf das einströmende Druckfluid stromaufwärtigen Ende offen, so dass dort ein Filtereinlass 34 über zumindest im Wesentlichen den gesamten Innenquerschnitt des Mantels 31 gebildet ist. Zwischen dem Boden 32 und dem Filtereinlass 34 umgibt der Mantel 31 einen Filterinnenraum 33. Die Filtereinrichtung 30 weist eine Trägerstruktur auf, die in einem Stück den Boden 32 und eine Stützstruktur 36 bildet. Die Trägerstruktur kann beispielsweise aus einem Kunststoffmaterial oder metallischen Material geformt sein. Ein vom Druckfluid durchströmbares, bei der Durchströmung Schmutzpartikel zurückhaltendes und dadurch das Druckfluid reinigendes Filtermaterial bildet nahezu den gesamten Umfang des Mantels 31. Es ist lediglich durch seitliche Verbindungsstege der Trägerstruktur, die den Boden 32 mit der Stützstruktur 36 verbinden, unterbrochen. Das Filtermaterial wird von der Trägerstruktur gehalten. Der Boden 32 ist undurchlässig.

Figur 5 zeigt das Steuerventil in einem in Figur 4 eingetragenen Querschnitt B-B. Der Mantel 31 ist im Querschnitt in Umfangsrichtung gesehen gewellt, wodurch ein besonders großer Filterquerschnitt erhalten wird, der wie in Figur 5 erkennbar, im Querschnitt die Form eines vielfach gezackten oder gewellten Sterns aufweist. Das Filtermaterial ist plissiert, um eine besonders gute Filtereinwirkung zu erhalten. Kostengünstiger wäre ein im Querschnitt ebenes oder nur einfach gebogenes Filtermaterial wie etwa ein im Querschnitt einfach ring- oder teilringförmig angeordnetes Filtermaterial.

Den Filterquerschnitt 35 bildet die Fläche der Filterhüllstruktur 31, 32, die von dem durch den Filtereinlass 34 einströmenden Druckfluid durchströmt wird, bevor das Druckfluid zum Kolbenauslass 23 gelangt, und die mit einem für die Reinigung des Druckfluids geeigneten Filtermaterial belegt ist. Im Falle beispielsweise einer Filterhüllstruktur mit einem kreiszylindrischen Mantel 31 und einem planen Boden 32, die jeweils vollständig aus Filtermaterial bestehen, bilden die kreiszylindrische Umfangsfläche und die kreisförmige Bodenfläche in der Summe den Filterquerschnitt 35. Bei dünnen Wandstärken spielt es keine Rolle, ob als Filterquerschnitt 35 die Fläche über den inneren oder den äußeren Umfang des Mantels 31 verstanden wird. Bei großen Wandstärken kann ersatzweise eine Mittenfläche zwischen innerem und äußerem Umfang als Filterquerschnitt 35 verstanden werden. Im ersten Ausführungsbeispiel ist der Filterquerschnitt 35 aufgrund des gewellten, aus Filtermaterial bestehenden Mantels 31 deutlich größer. Er entspricht der Fläche des auf eine plane Fläche ausgezogenen Mantels 31.

Die Filtereinrichtung 30 ist über die Stützstruktur 36 am Ventilgehäuse 10 abgestützt und dadurch insbesondere axial fixiert. Die Stützstruktur 36 ragt am stromaufwärtigen Ende nach außen über den Mantel 31 vor, im Beispiel nur flanschförmig. Sie umgibt den Filtereinlass 34. Die Filtereinrichtung 30 weist so im Ganzen die Form eines langgestreckten Zylinderhuts mit allerdings gewelltem Mantel 31 auf.

Die Ventilfeder 14 ist zwischen dem Ventilkolben 20 und der Stützstruktur 36 axial eingespannt. Sie stützt sich axial an der Stützstruktur 36 der Filtereinrichtung 30 ab. Mit dem anderen Federende wirkt sie axial auf den Ventilkolben 20.

Das Sperrorgan 40 ist stromauf von der Filtereinrichtung 30 ebenfalls noch im Ventilgehäuse 10 angeordnet. Es ist als Rückschlagventil gebildet und weist einen sphärischen Sperrkörper 41, einen Sperrkörpersitz 42, eine Feder 43 und für seine Abstützung und die Abstützung der Feder 43 eine Stützstruktur 44 auf. Die Stützstruktur 44 ist axial unbeweglich, vorzugsweise gänzlich unbeweglich, mit dem Ventilgehäuse 10 gefügt. Sie kann in eine Bohrung oder einen anders geformten, axial erstreckten Hohlraum des Ventilgehäuses 10 insbesondere eingepresst sein. Die Filtereinrichtung 30 stützt sich mit ihrer Stützstruktur 36 an der Stützstruktur 44 des Sperrorgans 40 axial ab. Die Abstützung kann zwar grundsätzlich in einem losen axialen Druckkontakt bestehen, wenn die Ventilfeder 14 eine ausreichend hohe Axialkraft auf die Stützstruktur 36 ausübt. Bevorzugter sind die Stützstrukturen 36 und 44 allerdings fest miteinander gefügt, so dass die Filtereinrichtung 30 mit der Stützstruktur 44 eine Montageeinheit bildet, die komplett in das Ventilgehäuse 10 eingesetzt werden kann. Der Sperrkörper 41 wird von einer Führung 45 axial geführt. Die Führung 45 ist an der Stützstruktur 44 geformt.

In einer Modifikation kann bei der Montage der Filtereinrichtung 30 durch Feinjustierung der axialen Position der Stützstrukturen 36 und 44 die Vorspannkraft der Ventilfeder 14 eingestellt werden. In der Modifikation kann von den Stützstrukturen 36 und 44 ein axialer Fortsatz in Richtung auf den Ventilkolben 20 abragen, so dass beim Einsetzen des Ventilkolbens 20 dieser gegen den Fortsatz drückt und die Stützstrukturen 36 und 44 verschiebt. Der Fortsatz der Stützstrukturen würde in solch einer Modifikation nach erfolgter Montage für den Ventilkolben 20 einen axialen Anschlag bilden, der dem Ventilkolben 20 die zweite axiale Endposition vorgibt.

Der Sperrkörpersitz 42 umgibt den Ventileinlass P, d.h. er bildet selbst unmittelbar den Ventileinlass P. Eine Besonderheit des Ausführungsbeispiels ist, dass unmittelbar das Ventilgehäuse 10 den Sperrkörpersitz 42 bildet und dieser nicht wie im Stand der Technik üblich mittels eines zusätzlichen Einsatzstücks bereitgestellt und mit dem Ventilgehäuse 10 gefügt werden muss. Das Ventilgehäuse 10 läuft im Bereich seines Ventileinlasses P am stromaufwärtigen Ende in Ausbildung unmittelbar des Sperrkörpersitzes 42 an seiner Mantelinnenfläche konisch verjüngt aus. Die Feder 43 wirkt auf den Sperrkörper 41 und drückt diesen gegen bzw. in den Sperrkörpersitz 42, so dass der Ventileinlass P geschlossen ist. Durch die Bereitstellung des Sperrkörpersitzes 42 unmittelbar durch das Ventilgehäuse 10, wobei unmittelbar bedeutet, dass zur Bereitstellung des Sperrkörpersitzes 42 kein Einsatzstück verwendet wird, kann das Sperrorgan 40 auf besonders einfache Weise mit wenigen und einfach herstellbaren Teilen verwirklicht werden. Ein weiterer Vorteil dieser Ausgestaltung ist, dass der Ventileinlass P einen größeren Strömungsquerschnitt aufweisen kann und dadurch geringere Strömungsverluste verursacht, als dies bei herkömmlichen Ausführungen der Fall ist, bei denen der Sperrkörpersitz 42 durch ein Einsatzstück bereitgestellt wird. Im Vergleich zu einem Sperrorgan, bei dem der Sperrkörpersitz von einem Einsatzstück gebildet wird, kann auch mit größerer Sicherheit gewährleistet werden, dass sich der Sperrkörpersitz nicht lösen kann. Die Gefahr eines Lösens, im Ausführungsbeispiel vom Ventilgehäuse 10, ist insbesondere bei Auftreten von Druckpulsationen nicht zu unterschätzen.

Wird dem Steuerventil am Ventileinlass P Druckfluid mit einem Druck zugeführt, der die Federkraft der Feder 43 und den Druck im Filterinnenraum 33 übersteigt, hebt der Sperrkörper 41 vom Sperrkörpersitz 42 ab und gibt den Ventileinlass P frei. Das Druckfluid strömt durch den Ventileinlass P unter Umströmung des Sperrkörpers 41 in das Ventilgehäuse 10 ein und durch einen axialen Durchgang des Sperrorgans 40 und den sich axial anschließenden Filtereinlass 34 in die Filterhüllstruktur 31, 32, d.h. in den Filterinnenraum 33. Das Druckfluid strömt von dort durch den Filterquerschnitt 35, wird beim Durchströmen gereinigt, insbesondere von Schmutzpartikeln befreit, und tritt über den gesamten Filterquerschnitt 35 in den stromabwärts der Filtereinrichtung 30 gelegenen Teil des Kolbenhohlraums 21 ein. Der Kolbenhohlraum 21 ist über den Kolbenauslass 23 entsprechend der axialen Position des Ventilkolbens 20 mit dem weiterführenden Steueranschluss und über diesen mit den Stellkammern 8 oder 9 verbunden, die dem betreffenden Steueranschluss A oder B zugeordnet sind. Die andere Gruppe der Stellkammern 8 und 9 ist über den dieser Gruppe zugeordneten Steueranschluss A oder B mit dem zugeordneten Ventilauslass T_{A} oder T_{B} verbunden und entsprechend im Druck entlastet.

Zur Verringerung von Strömungsverlusten trägt auch die axiale Führung des einströmenden Druckfluids bei. So sind unter diesem Aspekt der Ventileinlass P, der stromabwärtige Durchlass des Sperrorgans 40, der Filtereinlass 34 und der Kolbeneinlass 22 jeweils an einer axialen Stirnseite von Ventilgehäuse 10, Sperrorgan 40, Filtereinrichtung 30 und Ventilkolben 20 angeordnet. Die genannten Ein- und Durchlässe liegen auf einer gemeinsamen axialen Flucht, wie bevorzugt, aber nur beispielhaft auf der Achse R. Auf diese Weise erfährt das Druckfluid vom Ventileinlass P bis zum Kolbenauslass 23 geringstmögliche Umlenkungen und dadurch entsprechend geringe Strömungsverluste. Dies trägt zur Erhöhung der Stellgeschwindigkeit des Phasenstellers bei. Im Beispiel liegen die Ein- und Durchlässe axial hintereinander. Grundsätzlich können ein oder mehrere Einlässe oder ein Einlass und ein Durchlass axial auf gleicher Höhe liegen, wie dies bei dem Durchlass des Sperrorgans 40 und dem Filtereinlass 34 nahezu der Fall ist.

Im Sinne hoher Stellgeschwindigkeiten wirkt auch der durch die Nutzung des Kolbenhohlraums 21 ermöglichte große Filterquerschnitt 35. Noch ein Faktor, der große Filterquerschnitte 35 ermöglicht, ist die Ausbildung der Filtereinrichtung 30 als Hohlstruktur bzw. Filterhüllstruktur 31, 32. Die Filterhüllstruktur 31 und 32 weist im ersten Ausführungsbeispiel einen planen Boden 32 auf. In einer Abwandlung kann der Boden 32 sich beispielsweise auch nach außen ausbauchen oder selbst einen Filterquerschnitt bilden. Grundsätzlich kann der Mantel 31 beispielsweise auch konisch spitz auslaufend geformt sein, so dass ein Boden 32 im engeren Sinne nicht vorhanden ist. Darüberhinaus sind auch langgestreckte, andersartig auslaufende Mäntel 31 realisierbar. Die Bereitstellung als zylindrische Filterhüllstruktur 31, 32 hat jedoch fertigungstechnische Vorteile.

Hinsichtlich der Anordnung einer Filtereinrichtung und eines Sperrorgans im Steuerventil ist noch anzumerken, dass die Stützstruktur der Filtereinrichtung gleichzeitig auch eine Abstützung für eine Feder des Sperrorgans, beispielsweise der Feder 43 des Sperrorgans 40, oder eine Führung für den Sperrkörper, beispielsweise die Führung 45 für den Sperrkörper 41, bilden kann. Die Stützstrukturen 36 und 44 können in derartigen Ausführungen durch ein als Einheit geformtes Teil oder auch durch eine fest gefügte Einheit gebildet werden, so dass mit dem Einbau der Filtereinrichtung 30 gleichzeitig auch die Abstützung für die Feder des Sperrorgans oder die Führung des Sperrkörpers bereitgestellt wird.

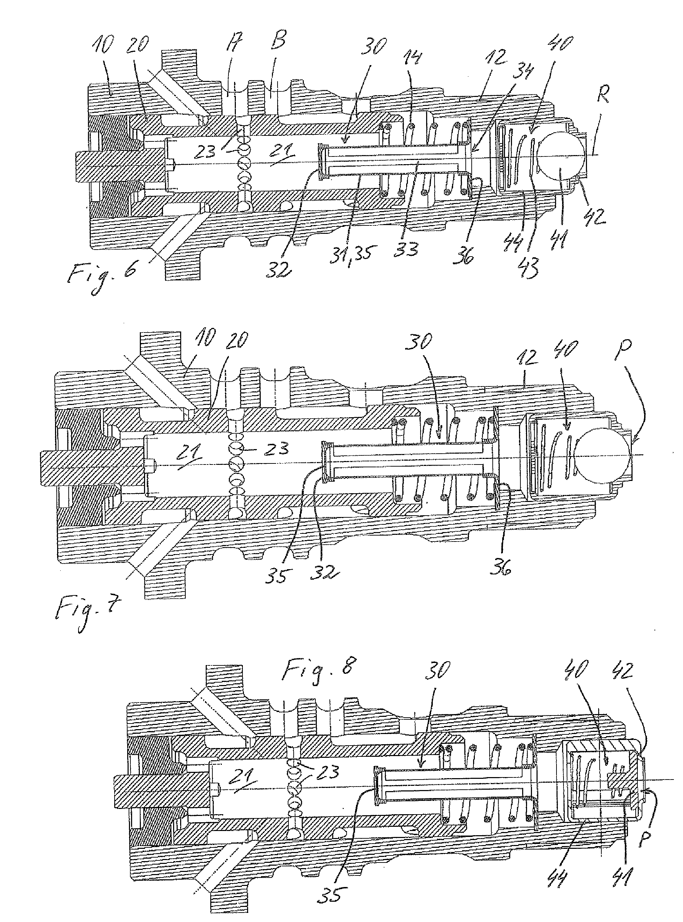

Figur 6 zeigt ein Steuerventil eines zweiten Ausführungsbeispiels, das gegenüber dem Steuerventil des ersten Ausführungsbeispiels sowohl in Bezug auf die Filtereinrichtung 30 als auch in Bezug auf das Sperrorgan 40 modifiziert ist. Die Filtereinrichtung 30 weist eine Filterhüllstruktur mit einem gegenüber dem ersten Ausführungsbeispiel modifizierten Mantel 31 auf. Der Mantel 31 wird zum weit überwiegenden Teil durch Filtermaterial gebildet, das im Unterschied zum ersten Ausführungsbeispiel jedoch einen glatten, einfach zylindrischen, beispielsweise kreiszylindrischen oder teilkreiszylindrischen Filterquerschnitt 35 bildet.

Im Unterschied zum ersten Ausführungsbeispiel ist die Filtereinrichtung 30 unabhängig vom Sperrorgan 40 unmittelbar am Ventilgehäuse 10 abgestützt. Die Stützstruktur 36 kann mit dem Ventilgehäuse 10 fest gefügt sein, beispielsweise verschweißt oder verklebt, oder auch nur durch die Ventilfeder 14 axial gegen einen vom Ventilgehäuse 10 gebildeten Sitz gedrückt werden. Auch insoweit gelten die Ausführungen zum ersten Ausführungsbeispiel, lediglich mit dem Unterschied, dass die Stützstruktur 36 nicht erst über einen Einsatzkörper, sondern direkt am Ventilgehäuse 10 abgestützt ist.

Das Sperrorgan 40 des zweiten Ausführungsbeispiels unterscheidet sich vom Sperrorgan 40 des ersten Ausführungsbeispiels im Wesentlichen dadurch, dass ein Einsatzstück, das insbesondere ein metallischer Körper sein kann, den Sperrkörpersitz 42 bildet. Das Einsatzstück ist hülsenförmig und bildet in einem Stück die Stützstruktur 44 für die Feder 43 und den Sperrkörpersitz 42. Das Einsatzstück bildet ferner den Ventileinlass P, der im zweiten Ausführungsbeispiel über das vordere Ende des eigentlichen Ventilgehäuses 10 vorsteht, in noch einer Abwandlung aber auch mit dessen stromaufwärtigen Ende abschließen oder hinter dem stromaufwärtigen Ende des Ventilgehäuses 10 ein Stück weit zurückstehen kann. Das Einsatzstück, das den Ventileinlass P bildet, wird als zum Ventilgehäuse 10 gehörig betrachtet, zumal es mit dem Ventilgehäuse 10 unbeweglich gefügt ist.

Im Übrigen entspricht das Steuerventil des zweiten Ausführungsbeispiels dem Steuerventil des ersten Ausführungsbeispiels, so dass auf die dortigen Ausführungen verwiesen werden kann.

Figur 7 zeigt ein Steuerventil eines dritten Ausführungsbeispiels, das gegenüber dem ersten Ausführungsbeispiel eine modifizierte Filtereinrichtung 30 und ein modifiziertes Sperrorgan 40 jeweils als integrierten Bestandteil aufweist, Das Sperrorgan 40 entspricht dem Ausführungsbeispiel der Figur 6. Die Filtereinrichtung 30 entspricht weitgehend der Filtereinrichtung 30 der Figur 6. Im Unterschied zur Filtereinrichtung 30 der Figur 6 bildet ein Filterquerschnitt 35 aus Filtennaterial auch einen Teil des Bodens 32, beispielhaft in Form einer zentralen Öffnung, die mit Filtermaterial ausgefüllt ist. Die Abstützung am Ventilgehäuse 10 entspricht ebenfalls weitgehend der des zweiten Ausführungsbeispiels. Sie unterscheidet sich von der dortigen Abstützung lediglich dadurch, dass die Stützstruktur 36 formschlüssig in eine Nut oder eine Mehrzahl von Einstichen an der Mantelinnenfläche des Ventilgehäuses 10 eingreift.

Figur 8 zeigt ein Steuerventil in einem vierten Ausführungsbeispiel mit einer Filtereinrichtung 30 entsprechend dem dritten Ausführungsbeispiel und einem nochmals modifizierten Sperrorgan 40. Das Sperrorgan 40 weist im Unterschied zu den bislang erläuterten Ausführungsbeispielen keinen sphärischen, sondern einen scheiben- oder tellerförmigen Sperrkörper 41 auf. Im Übrigen wird auch in Bezug auf dieses Ausführungsbeispiel auf die bereits erläuterten Ausführungsbeispiele verwiesen.

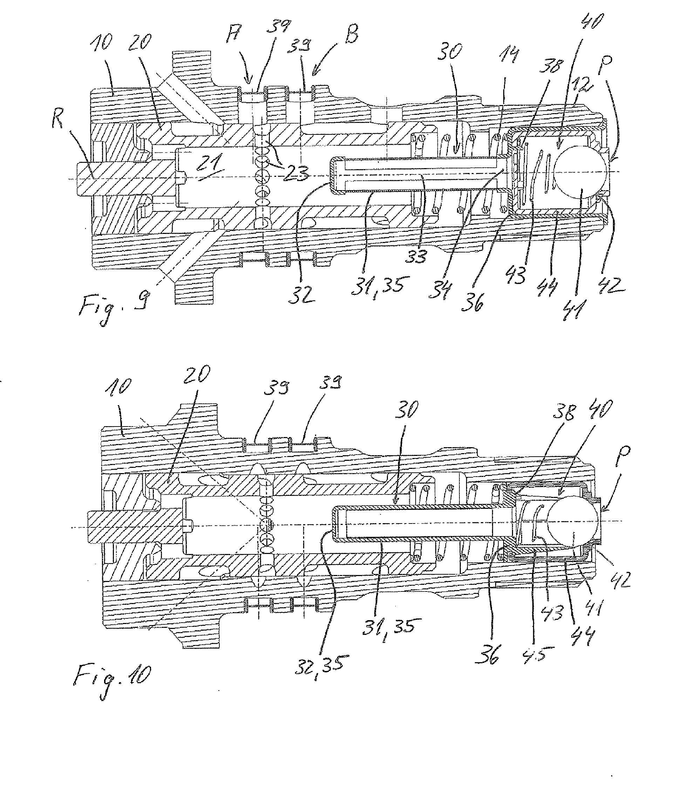

In Figur 9 ist ein Steuerventil eines fünften Ausführungsbeispiels dargestellt, das eine Filtereinrichtung 30 mit einer Filterhüllstruktur 31, 32 entsprechend dem zweiten Ausführungsbeispiel (Figur 6) und einer gegenüber den bisherigen Ausführungsbeispielen modifizierten Stützstruktur 36 aufweist. Die Stützstruktur 36 ist nicht wie in den bisherigen Ausführungsbeispielen einfach nur als Flansch gebildet, sondern hülsenförmig in Richtung auf das stromaufwärtige Ende des Ventilgehäuses 10 verlängert. Es ragt sogar über das stromaufwärtige Ende des Ventilgehäuses 10 in Ausbildung eines Hintergriffs vor, so dass es den Ventileinlass P umgibt. Die Stützstruktur 36 ist in den axial erstreckten Aufnahmehohlraum des Ventilgehäuses 10 eingepresst und wird durch den Hintergriff axial positioniert.

Die Stützstruktur 36 dient im fünften Ausführungsbeispiel auch der Befestigung der Stützstruktur 44 des Sperrorgans, indem die Stützstruktur 44 in einem Rasteingriff mit einem oder mehreren Rastmittel(n) 38 der Filtereinrichtung 30 verrastet ist. Das oder die Rastmittel 38 ist oder sind an der Stützstruktur 36 geformt. Die Stützstruktur 44 kann über den Formschluss im Bereich des Rasteingriffs hinaus auch reibschlüssig im Ventilgehäuse 10 gehalten sein, indem sie in die hülsenförmige Stützstruktur 36 eingepresst ist. Hierbei sorgt der Hintergriff der Stützstruktur 36 für deren sicheren Halt. In einer Abwandlung können die Stützstrukturen 36 und 44 auch zu einem einzigen Einsatzstück vereinigt werden. Die Stützstrukturen 36 und 44 können auch vormontiert sein, so dass sie in der dargestellten Position relativ zueinander bereits eine vormontierte Einheit bilden und als solche eingebaut werden können.

In Figur 9 sind weitere Filterquerschnitte 39 im Bereich der Steueranschlüsse A und B vorgesehen, so dass das Druckfluid beim Hinströmen zu den Stellkammern 8 oder 9 und beim Rückströmen von den druckentlasteten Stellkammern 8 und 9 nochmals gefiltert wird. Das die Filterquerschnitte 39 bildende Filtermaterial kann dem Filtermaterial der Filtereinrichtung 30 entsprechen. Die Filterquerschnitte 39 können insbesondere an Filterringen vorgesehen sein, die das Ventilgehäuse 10 im Bereich der Steueranschlüsse A und B umgeben.

Figur 10 zeigt ein Steuerventil eines sechsten Ausführungsbeispiels. Bei der Filtereinrichtung 30 ist zumindest die Filterhüllstruktur 31, 32 im Ganzen aus dem Filtermaterial geformt.

Die Stützstruktur 36 ist gegenüber den bisherigen Ausführungsbeispielen ebenfalls modifiziert, indem sie wie im fünften Ausführungsbeispiel (Figur 9) ein oder mehrere Rastmittel 38 für eine Rastverbindung mit der Stützstruktur 44 des Sperrorgans 40 bildet, aber im Unterschied zur Stützstruktur 36 des fünften Ausführungsbeispiels nicht unmittelbar am Ventilgehäuse 10, sondern über die Stützstruktur 44 am Ventilgehäuse 10 fixiert ist, nämlich durch den Rasteingriff mit der Stützstruktur 44. Zusätzlich kann sie über ihren äußeren Umfang aber auch reibschlüssig im Ventilgehäuse 10 gehalten sein. Die Stützstruktur 44 des Sperrorgans 40 ist hülsenförmig und in einem Presssitz im axial erstreckten Aufnahmeraum des Ventilgehäuses 10 befestigt. Sie bildet den Sperrkörpersitz 42. Die Stützstruktur 36 der Filtereinrichtung 30 stützt hingegen die Feder 43 des Sperrorgans 40 ab und bildet ferner eine Axialführung für den Sperrkörper 41, die mit dem Bezugszeichen 45 versehen, um diese Funktionalität zu kennzeichnen.

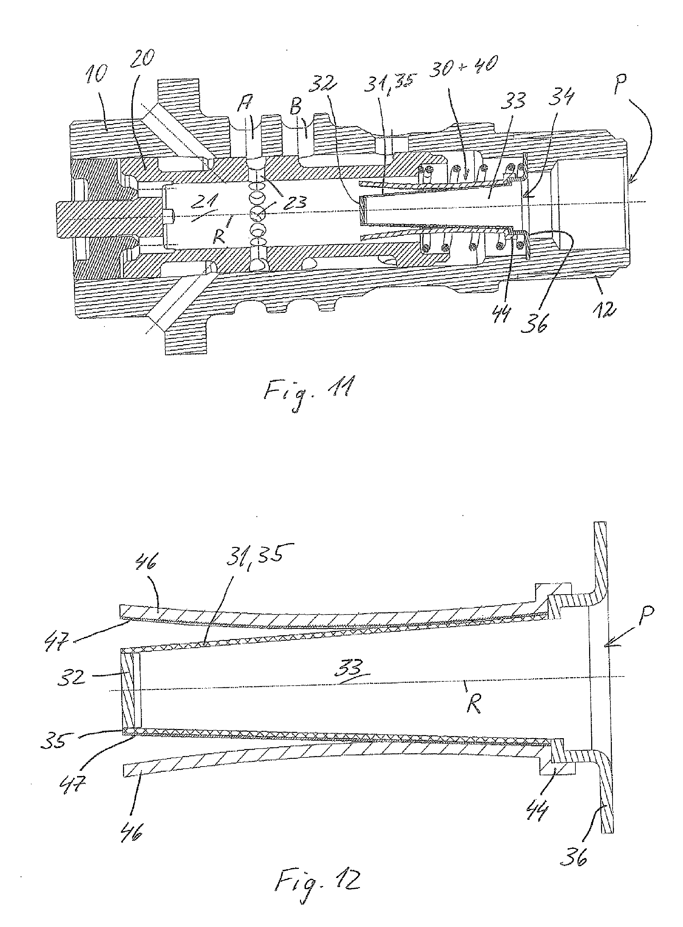

Figur 11 zeigt ein Steuerventil eines siebten Ausführungsbeispiels. Ein wesentlicher Unterschied zu den anderen Ausführungsbeispielen besteht darin, dass die Filtereinrichtung 30 und das Sperrorgan 40 unmittelbar beieinander, quasi am gleichen Ort gebildet sind. Um dies zu erreichen, sind der äußeren Oberfläche der Filterhüllstruktur 31, 32 zugewandt eine Anschlagstruktur und eine Sperrstruktur angeordnet. Die Anschlagstruktur bildet über den Umfang der Filterhüllstruktur 31, 32 mehrere zum stromabwärtigen Ende der Filterhüllstruktur 31, 32 hin sich abspreizende zungenförmige Anschläge 46. Die Sperrstruktur überdeckt den Filterquerschnitt 35. Die Sperrstruktur ist für das Druckfluid undurchlässig.

In Figur 12 sind die Filtereinrichtung 30 und das damit vereinigte Sperrorgan 40 vor dem Einbau in das Steuerventil abgebildet. Die Sperrstruktur weist in Überlappung mit den Anschlägen 46 streifen- bzw. zungenförmige, elastisch biegbare Sperrelemente 47 auf, die sich bei einem im Filterinnenraum 33 herrschenden Überdruck vom Mantel 31 der Filtereinrichtung 30 elastisch abspreizen und den Filterquerschnitt 35 des Filtermantels 31 freigeben, so dass das Druckfluid durch die Filtereinrichtung 30 strömen kann. Die biegbaren Sperrstreifen oder -elemente 47 ersetzen den Sperrkörper 41 der anderen Ausführungsbeispiele. Sie verhindern wie dieser eine Rückströmung von Druckfluid vom Kolbendurchlass 23 durch die Filtereinrichtung 30 in Richtung auf den Ventileinlass P. Lediglich zu Illustrationszwecken ist im Längsschnitt der Figur 12 das obere Sperrelement 47 im geöffneten Zustand dargestellt, in dem dieses Sperrelement 47 mit seiner Außenseite an einem der Anschläge 46 der äußeren Anschlagstruktur anliegt, während das untere Sperrelement 47 in seiner an den Filtermantel 31 angelegten, dem geschlossenen Zustand des Sperrorgans 40 entsprechenden Position dargestellt ist. Bei ordnungsgemäßer Funktion des Sperrorgans 40 werden sämtliche Sperrelemente 47 den Druckverhältnissen entsprechend entweder den geschlossenen, am Filtermantel 31 anliegenden Zustand einnehmen oder am zugeordneten Anschlag 46 anliegen, so dass das Sperrorgan 40 entweder offen oder geschlossen ist. Der Filterquerschnitt 35 ist den Sperrelementen 47 entsprechend ebenfalls streifenförmig über den Mantel 31 verteilt gebildet.

Die Zusammenführung von Filter- und Sperrfunktion ermöglicht eine axiale Verkürzung des Ventilgehäuses 10 und somit des Steuerventils. Bei dem in Figur 11 abgebildeten Steuerventil wird diese Möglichkeit allerdings nicht genutzt.

Das Sperrorgan 40 stützt sich mit seiner Stützstruktur 44 an der Stützstruktur 36 der Filtereinrichtung 30 ab, die unmittelbar im Ventilgehäuse 10 abgestützt ist, beispielhaft wie im dritten Ausführungsbeispiel (Figur 7). Die Verhältnisse bei der Abstützung könnten auch umgekehrt werden, d.h. es könnte auch stattdessen bei entsprechender Modifikation die Filtereinrichtung 30 über das Sperrorgan 40 bzw. dessen Stützstruktur am Ventilgehäuse 10 abgestützt werden. Die Filtereinrichtung 30 und das Sperrorgan 40 bilden eine bereits vor dem Einbau in das Steuerventil gefügte Baueinheit, wodurch der Einbau in das Steuerventil erleichtert wird. Grundsätzlich wäre es aber denkbar, die Filtereinrichtung 30 und das Sperrorgan 40 auch in der am gleichen Ort zusammengeführten Ausführung voneinander separat auszuführen und nacheinander einzubauen.

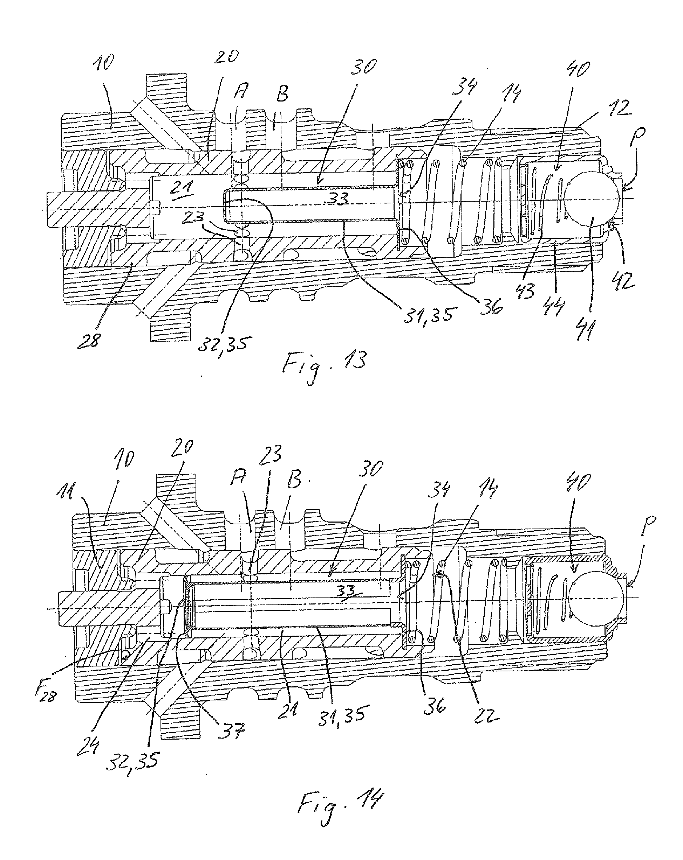

Die Figuren 13 und 14 zeigen nicht beanspruchte Ausführungsbeispiele, die sich von den Ausführungsbeispielen der Figuren 1 bis 12 dadurch unterscheiden, dass die Filtereinrichtung 30 nicht am Ventilgehäuse 10, sondern am Ventilkolben 20 abgestützt ist und dementsprechend dessen axiale Bewegungen mitmacht. Die Ventilfeder 14 stützt sich entsprechend mit einem Federende am Ventilgehäuse 10 und mit dem anderen Federende über die Stützstruktur 36 der Filtereinrichtung 30 am Ventilkolben 20 ab und beaufschlagt den Ventilkolben 20 in dieser Weise in Richtung auf die eingenommene Endposition mit ihrer Federkraft.

Die Filtereinrichtung 30 des Ausführungsbeispiels der Figur 13 entspricht in Bezug auf die Filterhüllstruktur 31, 32 der des sechsten Ausführungsbeispiels (Figur 10). Sie ist im Ganzen einschließlich ihrer Stützstruktur 36 als axial langgestrecktes, hülsenförmiges Teil geformt, das vollständig aus dem Filtermaterial besteht. Sie kann beispielsweise aus einer aus dem Filtermaterial bestehenden flächenhaften Ronde durch Tiefen oder Tiefziehen geformt werden. Sie kann alternativ aber auch aus mehreren Teilen gefügt sein.

Die Abstützung am Ventilkolben 20 hat den Vorteil, dass die Filterhüllstruktur 31, 32 sich innerhalb des Ventilkolbens 20 über eine größere axiale Länge erstrecken kann, da aufgrund der nicht vorhandenen Relativbewegung weniger Rücksicht auf Fertigungstoleranzen und Änderungen von Abmessungen während des Betriebs genommen werden muss. Andererseits erzeugt jedoch der für das Durchströmen der Filtereinrichtung 30 zu überwindende Strömungswiderstand eine auf den Ventilkolben 20 wirkende Axialkraft. Dieser Axialkraft kann zumindest teilweise durch eine angepasste zusätzliche Vergrößerung der durch die Aufweitung 28 bereitgestellten Kompensationsfläche entgegengewirkt werden, d.h. die Kolbenfläche F₂₈ (Figur 4) kann nochmals vergrößert werden.

Die durch die Abstützung der Filtereinrichtung 30 am Ventilkolben 20 erzeugte Axialkraft wird in dem Ausführungsbeispiel, das in Figur 14 gezeigt ist, durch die Filtereinrichtung 30 zumindest teilweise kompensiert. Die Filtereinrichtung 30 dieses Ausführungsbeispiels ist speziell hierfür in angepasster Weise modifiziert. Die Anpassung besteht darin, dass die Filterhüllstruktur 31, 32 an einem äußeren Umfang umlaufend eine Dichtung 37 aufweist, die den Hohlraum 21 des Ventilkolbens 20 in einen ersten Teilraum und einen zweiten Teilraum unterteilt und die beiden Teilräume durch die Dichtung 37 fluidisch voneinander getrennt sind. Der Kolbenauslass 23 mündet im ersten Teilraum, so dass dieser in Abhängigkeit von der Position des Ventilkolbens 20 mit einem der Steueranschlüsse A und B in Verbindung steht. Der zweite Teilraum steht über die Zuführung 24 mit der Rückseite des Ventilkolbens in Verbindung, die der Stirnverschlusswand 11 axial gegenüberliegt.

Im Betrieb des Phasenstellers tritt ein Teil des durch den Filtereinlass 34 in die Filtereinrichtung 30 einströmenden Druckfluids über den am Umfang der Filterhüllstruktur 31, 32 vorhandenen Filterquerschnitt 35 in den ersten Teilraum und gelangt von dort über den Kolbenauslass 23 und den der Kolbenposition entsprechend angeschlossenen Steueranschluss A oder B zu den zugeordneten Stellkammern 8 oder 9. Ein anderer Teil des Druckfluids tritt durch den im Boden 32 vorhandenen Filterquerschnitt 35 in den zweiten Teilraum und wirkt dort auf die Rückseite der Filtereinrichtung 30, insbesondere auf die nach außen über den Filterinnenraum 33 überstehende Ringfläche der Dichtung 37 und erzeugt so eine auf die Filtereinrichtung 30 wirkende Axialkraft, die der aufgrund des Durchflusswiderstands der Filtereinrichtung 30 entstehenden Axialkraft gegenwirkt und diese kompensiert.

Wird die auf den Ventilkolben 20 in Richtung auf das Stellglied 15 (Figur 1) wirkende Axialkraft wie bevorzugt mittels einer radialen Aufweitung 28 des Ventilkolbens 20 kompensiert, so geht mit der Durchströmbarkeit der Filtereinrichtung 30 in Richtung auf den zweiten Teilraum einher, dass der am Filtereinlass 34 herrschende Druck auch für die Kompensation der Axialkraft zur Verfügung steht. Hierbei kann es vorteilhaft sein, wenn der Filterquerschnitt 35, über den die Verbindung zwischen dem Filterinnenraum 33 und dem zweiten Teilraum besteht, einen geringeren Durchflusswiderstand als der Filterquerschnitt 35 aufweist, der den Filterinnenraum 33 mit dem Kolbendurchlass 23 verbindet. Gegebenenfalls kann auf den Filterquerschnitt 35 im Boden 32 auch gänzlich verzichtet werden, wobei einer Filterung auch des in den zweiten Teilraum tretenden Druckfluids allerdings der Vorzug gegeben wird.

Der zweite Teilraum ist wie bereits erwähnt, obgleich nur beispielhaft, über die Kompensations-Zuführung 24 mit dem Raum verbunden, den die Stirnverschlusswand 11 und der Ventilkolben 20 axial begrenzen. Diese Ausgestaltung hat den weiteren Vorteil, dass bei einer Bewegung des Ventilkolbens 20 aus der zweiten Kolbenposition in Richtung auf die in Figur 14 eingenommene erste Kolbenposition Druckfluid aus dem Raum zwischen der Stirnverschlusswand 11 und der Rückseite des Ventilkolbens 20 durch die Zuführung 24 in den zweiten Teilraum strömt und durch den im Boden 32 vorhandenen Filterquerschnitt 35 wieder in den Filterinnenraum 33 tritt. Auf diese Weise wird ein Rückspüleffekt erzeugt, der mit einer Reinigung des Filterquerschnitts 35 nicht nur im Bereich des Bodens 32, sondern auch im Bereich des Mantels 31 einhergeht.

Die Dichtung 37 kann insbesondere als Dichtlippe gebildet sein, so dass die Filtereinrichtung 30 für ihre Montage durch den Kolbeneinlass 22 in den Kolbenhohlraum 21 geschoben und in der Fügeposition mittels ihrer Stützstruktur 36 mit dem Ventilkolben 20 gefügt werden kann. Die Dichtung 37 ist im Bereich des Bodens 32 gebildet, um einen möglichst langen Filterquerschnitt 35 im Bereich des Filtermantels 31 zu erhalten.

Von den erläuterten Unterschieden abgesehen wird auch in diesem Ausführungsbeispiel wieder auf die Ausführungen zum ersten Ausführungsbeispiel verwiesen, wobei allerdings der vom Mantel 31 gebildete Filterquerschnitt 35 nicht gewellt, sondern glattzylindrisch ist, so dass der Filterquerschnitt 35 insgesamt beispielsweise dem des Ausführungsbeispiels der Figur 7 entspricht. Das Sperrorgan 40 entspricht ebenfalls früheren Ausführungsbeispielen, etwa den Ausführungsbeispielen der Figuren 6 und 7.

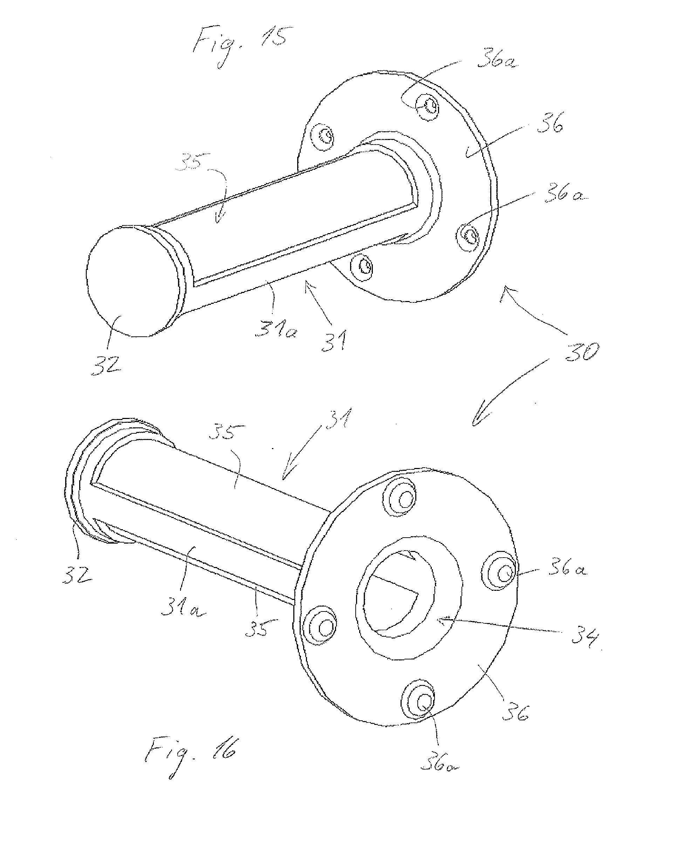

Die Figuren 15 und 16 zeigen eine Filtereinrichtung 30 jeweils in perspektivischer Sicht und vor dem Einbau in ein Steuerventil. Die Filtereinrichtung 30 umfasst wie bereits zum ersten Ausführungsbeispiel geschildert eine Trägerstruktur, die den Boden 32, die Stützstruktur 36 und die axial erstreckten Verbindungsstege 31 a umfasst. Die Verbindungsstege 31a bilden mit dem Filterquerschnitt 35 den Mantel 31 der Filtereinrichtung 30. Soweit entspricht die Filtereinrichtung 30 der Figuren 15 und 16 dem zweiten Ausführungsbeispiel (Figur 6) und mit Ausnahme des nur einfach hülsenförmigen Filterquerschnitts 35 auch der Filtereinrichtung 30 des ersten Ausführungsbeispiels.

Die Trägerstruktur 31 a, 32, 36 ist aus einem plastisch verformbaren Material gebildet, vorzugsweise aus einem Metall.

Die Stützstruktur 36 weist einen über den Mantel 31 nach radial außen vorragenden Flansch auf, mit dem sie sich an einer axialen Abstützung des Ventilgehäuses 10 oder des Ventilkolbens 20 abstützt, beispielsweise wie in den Figuren 6, 7, 8, 11, 13 und 14 dargestellt. Die axiale Abstützung kann auch von einem Zwischenkörper gebildet werden, der direkt oder über einen oder mehrere weitere Zwischenkörper entweder am Ventilgehäuse 10 oder am Ventilkolben 20 abgestützt ist. Dass es sich um eine axiale Abstützung des Ventilgehäuses 10 oder des Ventilkolbens 20 handelt, bedeutet lediglich, dass die axiale Abstützung letztlich am Ventilgehäuse 10 oder dem Ventilkolben 20 stattfindet, entweder direkt oder über einen oder mehrere Zwischenkörper.

Der Flansch der Stützstruktur 36 weist an seiner im eingebauten Zustand die axiale Abstützung kontaktierenden Stirnfläche axial abragende Kontaktelemente 36a auf, die wie bevorzugt gleichmäßig über die Stirnfläche verteilt angeordnet sind. Die Kontaktelemente 36a sind als lokale Ausbauchungen bzw. Noppen des Flansches geformt. Sie können durch axialen Druck plastisch verformt und dadurch axial gestaucht werden. Dies kann insbesondere beim Einbau der Filtereinrichtung 30 dadurch erzielt werden, dass die Filtereinrichtung 30 im Bereich des Flansches der Stützstruktur 36 gegen die axiale Abstützung gedrückt wird. Bei entsprechender Druckkraft können die Kontaktelemente 36a im Extremfall auch platt gedrückt werden, so dass eine plane Stirnfläche am Flansch erhalten wird.

Die Stützstruktur 36 im Bereich des Flansches mit Kontaktelementen 36a zu versehen, hat Vorteile insbesondere für Ausführungsbeispiele, in denen die Stützstruktur 36 mittels der Ventilfeder 14 gegen die axiale Abstützung des Ventilgehäuses 10 oder des Ventilkolbens 20 gedrückt wird. Durch axiales Stauchen der Kontaktelemente 36a kann oder können eine Vorspannkraft, mit der die Ventilfeder 14 in der in den Figuren dargestellten Endposition des Ventilkolbens 20 auf diesen wirkt, d.h. die im eingebauten Zustand geringste Federkraft, oder der Federweg der Ventilfeder 14 eingestellt oder axiale Fertigungs- oder Montagetoleranzen kompensiert werden. Es müssen beim Einbau der Filtereinrichtung 30 lediglich die Stützstruktur 36 mit der entsprechenden Kraft gegen die axiale Abstützung gedrückt und die Kontaktelemente 36a der Kraft entsprechend axial gestaucht werden. Die Stützstruktur 36 kann zusätzlich zu diesem axialen Anpressen an die axiale Abstützung über ihren Umfang reibschlüssig am Ventilgehäuse 10 oder dem Ventilkolben 20 gehalten sein.

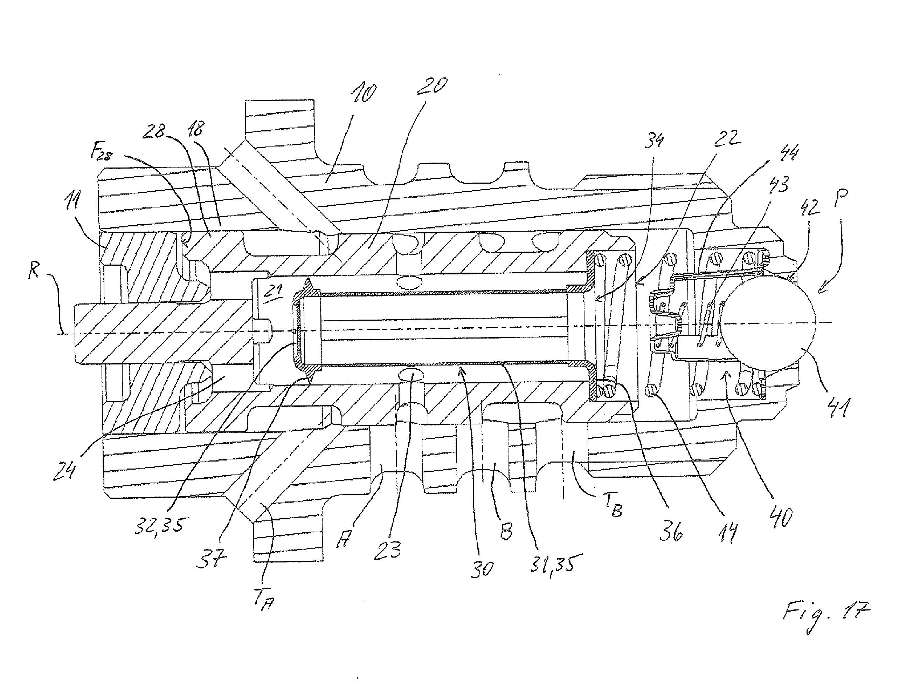

Figur 17 zeigt ein Steuerventil eines weiteren nicht beanspruchten Ausführungsbeispiels. Das Steuerventil entspricht hinsichtlich der Federeinrichtung 30 dem Ausführungsbeispiel der Figur 14, ist also wie dort axial am Ventilkolben 20 abgestützt und unterteilt mit einer Dichtung 37 den Hohlraum 21 des Ventilkolbens 20 wie zu diesem Ausführungsbeispiel erläutert in einen ersten und einen zweiten Teilraum zum Zwecke der Kompensation einer vom Druckfluid auf den Ventilkolben 20 ausgeübten Axialkraft. Insoweit gelten die Ausführungen zum Ausführungsbeispiel der Figur 14.

Im nicht beanspruchten Ausführungsbeispiel der Figur 17 bildet wie bereits im ersten Ausführungsbeispiel das Ventilgehäuse 10 unmittelbar den Sperrkörpersitz 42 des Sperrorgans 40. Die Stützstruktur 44 des Sperrorgans 40 weist wie die Stützstruktur 36 der Filtereinrichtung 30 einen nach radial außen abragenden Flansch auf, mit dem sie axial am Ventilgehäuse 10 abgestützt ist. Der Flansch der Stützstruktur 44 kann vorteilhafterweise mit Kontaktelementen 36a entsprechend dem Flansch der Stützstruktur 36 versehen sein. Die Anordnung der Stützstrukturen 36 und 44 ist derart, dass die Ventilfeder 14 in die eine axiale Richtung auf die Stützstruktur 36 und in die andere axiale Richtung auf die Stützstruktur 44 wirkt, beispielhaft zwischen den beiden Stützstrukturen 36 und 44 eingespannt ist. Hinsichtlich der axialen Abstützung der Stützstruktur 44 und der dort optional vorhandenen Kontaktelemente 36a wird auf die Ausführungen zur Filtereinrichtung 30 der Figuren 15 und 16 verwiesen. Die Kontaktelemente 36a können wie bereits erwähnt sowohl an der Stützstruktur 36 als auch an der Stützstruktur 44 in der geschilderten Weise vorgesehen und beim Einbau der Stützstruktur 36 und 44 zur Justage der Ventilfeder 14 axial gestaucht werden. In noch einer Modifikation können die Kontaktelemente 36a auch nur an der Stützstruktur 44 des Sperrorgans 40 und nicht an der Stützstruktur 36 vorgesehen sein.

Zu den Filterhüllstrukturen 31, 32 und den von ihnen gebildeten Filterquerschnitten 35 und den Stützstrukturen 36 ist noch anzumerken, dass grundsätzlich jede der Filterhüllstrukturen 31, 32 mit jeder der Stützstrukturen 36 der unterschiedlichen Ausführungsbeispiele kombiniert werden kann. Hinsichtlich des Sperrorgans 40 gilt Vergleichbares. So können beispielsweise die sphärischen Sperrkörper 41 jeweils durch einen scheiben- oder tellerförmigen Sperrkörper 41 entsprechend dem Ausführungsbeispiel der Figur 8 ersetzt werden. Ebenso kann der scheiben- bzw. tellerförmige Sperrkörper 41 im Ausführungsbeispiel der Figur 8 mit geringfügigen Anpassungen durch den sphärischen Sperrkörper 41 der anderen Ausführungsbeispiele ersetzt werden.

Grundsätzlich ist auch anzumerken, dass die Bereitstellung sowohl einer Filtereinrichtung 30 als auch eines Sperrorgans 40 in Form integrierter Bestandteile des Steuerventils besonders vorteilhaft ist, dass aber die Bereitstellung beispielsweise nur der Filtereinrichtung 30 oder nur des Sperrorgans 40 als integrierter Bestandteil des Steuerventils bereits vorteilhaft ist.

### Bezugszeichenliste:

- 1: Nockenwelle
- 2: Maschinengehäuse
- 2a: Deckel
- 3: Stator
- 4: Antriebsrad
- 5: Flügelrad
- 5a: Statorflügel
- 6: Deckel
- 7: Rotor
- 7a: Rotorflügel
- 7b: Verbindungskanal
- 8: Frühstellkammer
- 9: Spätstellkammer
- 10: Ventilgehäuse
- 11: Stirnverschlusswand
- 12: Verbindungsabschnitt
- 13: -
- 14: Ventilfeder
- 15: Stellglied
- 16: Spule
- 17: Anker
- 18: aufgeweiteter Gehäuseabschnitt
- 19: -
- 20: Ventilkolben
- 21: Hohlraum
- 22: Kolbeneinlass
- 23: Kolbenauslass
- 24: Kompensations-Zuführung
- 25: Kopplungsorgan
- 26: Vertiefung
- 27: Vertiefung
- 28: Aufweitung, aufgeweiteter Kolbenabschnitt
- 29: -
- 30: Filtereinrichtung
- 31: Filterhüllstruktur, Mantel
- 31a: Verbindungssteg
- 32: Filterhüllstruktur, Boden
- 33: Filterinnenraum
- 34: Filtereinlass
- 35: Filterquerschnitt
- 36: Stützstruktur
- 36a: Kontaktelement
- 37: Dichtung
- 38: Rastmittel
- 39: Filterquerschnitt
- 40: Sperrorgan
- 41: Sperrkörper
- 42: Sperrkörpersitz
- 43: Feder
- 44: Stützstruktur
- 45: Führung
- 46: Anschlag
- 47: Sperrelement
- 48: -
- 49: -
- 50: Verriegelungspin

- A: Steueranschluss
- B: Steueranschluss
- D: Drehrichtung des Stators
- F₂₅: Querschnittsfläche
- F₂₈: Querschnittsfläche
- P: Ventileinlass,
- R: Drehachse, zentrale Achse
- T_{A}: Ventilauslass
- T_{B}: Ventilauslass

## Patentansprüche

1. Steuerventil zum Steuern eines Druckfluids, das Steuerventil umfassend:
(a) ein Ventilgehäuse (10) mit einem Ventileinlass (P) für das Druckfluid, einem Steueranschluss (A, B) für einen Anschluss an ein mit dem Druckfluid zu betreibendes Aggregat und einem Ventilauslass (T_{A}, T_{B}),
(b) einen im Ventilgehäuse (10) längs einer Achse (R) beweglichen Ventilkolben (20) mit einem Hohlraum (21), durch den das Druckfluid vom Ventileinlass (P) zu dem Steueranschluss (A, B) strömen kann,
(c) und eine im Steuerventil angeordnete Filtereinrichtung (30) mit einem Filterquerschnitt (35), bei dessen Durchströmung das Druckfluid gefiltert wird,
(d) sich die Filtereinrichtung (30) mit zumindest einem Teil des Filterquerschnitts (35) im Hohlraum (21) des Ventilkolbens (20) befindet,
**dadurch gekennzeichnet, dass**
(e) die Filtereinrichtung (30) an dem Ventilgehäuse (10) abgestützt ist und in den Ventilkolben (20) ragt.

2. Steuerventil nach dem vorhergehenden Anspruch, **dadurch gekennzeichnet, dass** die Filtereinrichtung (30) eine im Hohlraum (21) des Ventilkolbens (20) erstreckte Filterhüllstruktur (31, 32), die einen Filterinnenraum (33) umgibt, und einen Filtereinlass (34) in den Filterinnenraum (33) aufweist und der Filterquerschnitt (35) zumindest einen Teil, vorzugsweise zumindest einen überwiegenden Teil der den Filterinnenraum (33) umgebenden Hüllfläche der Filterhüllstruktur (31, 32) bildet, so dass das Druckfluid durch den Filtereinlass (34) in den Filterinnenraum (33) und aus dem Filterinnenraum durch den Filterquerschnitt (35) zu dem Steueranschluss (A, B) strömen kann.

3. Steuerventil nach dem vorhergehenden Anspruch, **dadurch gekennzeichnet, dass** die Filterhüllstruktur (31, 32) einen axial erstreckten Mantel (31) und einen vom Filtereinlass (34) axial beabstandeten Boden (32) aufweist und der Filterquerschnitt (35) zumindest einen Teil, vorzugsweise zumindest einen überwiegenden Teil der Fläche des Bodens (32) oder zwischen dem Filtereinlass (34) und dem Boden (32) zumindest einen Teil, vorzugsweise zumindest einen überwiegenden Teil der Fläche des Mantels (31) bildet.

4. Steuerventil nach einem der vorhergehenden Ansprüche, **dadurch gekennzeichnet, dass** eine axiale Filteröffnung der Filtereinrichtung (30), die vorzugsweise an einem axialen Ende der Filtereinrichtung (30) gelegen ist, den Filtereinlass (34) bildet, so dass das Druckfluid axial in die Filtereinrichtung (30) einströmen kann.

5. Steuerventil nach einem der vorhergehenden Ansprüche, **dadurch gekennzeichnet, dass** der Ventilkolben (20) gegen die rückstellende Kraft einer Ventilfeder (14) beweglich ist, die Filtereinrichtung (30) eine Stützstruktur (36) aufweist, mit der die Filtereinrichtung (30) an dem Ventilgehäuse (10) oder dem Ventilkolben (20) abgestützt ist, vorzugsweise axial, und sich die Ventilfeder (14) an der Stützstruktur (36) abstützt.

6. Steuerventil nach einem der vorhergehenden Ansprüche, **dadurch gekennzeichnet, dass** eine axiale Gehäuseöffnung des Ventilgehäuses (10; 10, 44), die vorzugsweise an einem axialen Ende des Ventilgehäuses (10) gelegen ist, den Ventileinlass (P) bildet, so dass das Druckfluid dem Steuerventil axial zuführbar ist, und der Ventilkolben (20) vorzugsweise einen axialen Kolbeneinlass (22) aufweist, durch den das Druckfluid axial in den Hohlraum (21) des Ventilkolbens (20) einströmen kann, vorzugsweise innerhalb der Filtereinrichtung (30).

7. Steuerventil nach einem der vorhergehenden Ansprüche, **dadurch gekennzeichnet, dass** der Ventilkolben (20) einen axialen Kolbeneinlass (22), durch den das Druckfluid in den Hohlraum (21) strömen kann, und eine Zuführung (24) aufweist, die den Hohlraum (21) mit einer von dem Kolbeneinlass (22) axial abgewandten Stirnfläche (F₂₈) des Ventilkolbens (20) verbindet, und in bevorzugten Ausführungen diese Stirnfläche (F₂₈) über die Zuführung (24) mit dem zweiten Teilraum des vorhergehenden Anspruchs verbunden ist.

8. Steuerventil nach einem der vorhergehenden Ansprüche, **dadurch gekennzeichnet, dass** ein den Filterquerschnitt (35) bildendes Filtermaterial ein Gewebe, ein Geflecht, ein Vlies, ein offenporiger Schaumstoff oder ein offenporiges Sintermaterial oder aus einer Kombination von wenigstens zwei dieser Materialien gebildet ist.

9. Steuerventil nach einem der vorhergehenden Ansprüche, **dadurch gekennzeichnet, dass** ein Sperrorgan (40), das der Verhinderung einer Rückströmung des Druckfluids von dem Steueranschluss (A, B) zum Ventileinlass (P) dient, Bestandteil des Steuerventils ist.

10. Steuerventil nach dem vorhergehenden Anspruch, **dadurch gekennzeichnet, dass** eine Stützstruktur (36) der Filtereinrichtung (30) mit einer Stützstruktur (44) des Sperrorgans (40) fest verbunden oder in einem Stück geformt oder eine der Stützstrukturen (36, 44) an der anderen in einem Druckkontakt axial abgestützt ist.

11. Steuerventil nach einem der Ansprüche 9 und 10 und einem der folgenden Merkmale:
(i) das Sperrorgan (40) ist stromauf der Filtereinrichtung (30) zwischen dem Ventileinlass (P) und der Filtereinrichtung (30) angeordnet;
(ii) das Sperrorgan (40) ist in einer zumindest einen Teil des Filterquerschnitts (35) aufweisenden Filterhüllstruktur (31, 32) der Filtereinrichtung (30) angeordnet;
(iii) die Filtereinrichtung (30) und das Sperrorgan (40) sind zu einer als Einheit im Steuerventil angeordneten Baueinheit vereint.

12. Steuerventil nach einem der Ansprüche 9 bis 11, **dadurch gekennzeichnet, dass** das Sperrorgan (40) einen Sperrkörper (41), einen Sperrkörpersitz (42) und eine den Sperrkörper (41) in den Sperrkörpersitz (42) drückende Feder (43) aufweist, wobei das Ventilgehäuse (10) vorzugsweise unmittelbar den Sperrkörpersitz (42) bildet.

13. Steuerventil nach einem der Ansprüche 9 bis 11, **dadurch gekennzeichnet, dass** das Sperrorgan (40) ein oder mehrere Sperrelemente (47) umfasst, das oder die den Filterquerschnitt (35) überdeckt oder überdecken, und das oder die Sperrelemente (47) gegen eine elastische Rückstellkraft aus der Überdeckung mit dem Filterquerschnitt (35) beweglich, vorzugsweise elastisch wegbiegbar ist oder sind.

14. Steuerventil nach einem der vorhergehenden Ansprüche, **dadurch gekennzeichnet, dass**
(i) das Steuerventil eine axial auf den Ventilkolben (20) wirkende Ventilfeder (14) aufweist,
(ii) die Filtereinrichtung (30) oder das Sperrorgan (40) nach einem der Ansprüche 9 bis 13 eine Stützstruktur (36; 44) mit einem Flansch aufweist oder jeweils aufweisen,
(iii) die Stützstruktur (36; 44) axial an einer Abstützung des Ventilgehäuses (10) abgestützt ist
(iv) und der Flansch an einer der Abstützung axial zugewandten Stirnfläche mehrere Kontaktelemente (36a) aufweist,
(v) wobei die Kontaktelemente (36a) axiale Abragungen oder platt gedrückt sind und von der Ventilfeder (14) gegen die axiale Abstützung gedrückt werden.

15. Steuerventil nach einem der vorhergehenden Ansprüche, **dadurch gekennzeichnet, dass** das Steuerventil (10, 20) in Bezug auf die Anordnung aus Stator (3) und Rotor (7) zentral angeordnet ist und in bevorzugten Ausführungen das Ventilgehäuse (10) einen Verbindungsabschnitt (12) für eine drehmomentfeste Verbindung von Rotor (7) und Nockenwelle (1) aufweist.

16. Phasensteller zur Verstellung der Drehwinkelposition einer Nockenwelle relativ zu einer Kurbelwelle einer Brennkraftmaschine, der Phasensteller umfassend:
(a) einen von der Kurbelwelle drehantreibbaren Stator (3),
(b) einen vom Stator (3) um eine Drehachse (R) drehantreibbaren und zum Drehantreiben der Nockenwelle (1) mit dieser koppelbaren Rotor (7), der mit dem Stator (3) Stellkammern (8, 9) bildet, die mit einem Druckfluid beaufschlagbar sind, um den Rotor (7) relativ zum Stator (3) um die Drehachse (R) verstellen zu können,
(c) und ein Steuerventil nach einem der Ansprüche 1 bis 15, das mit den Stellkammern (8, 9) verbundene Steueranschlüsse (A, B) aufweist,
(d) wobei das Ventilgehäuse (10) sich vorzugsweise im Rotor (7) axial erstreckt.

## Claims

1. A control valve for controlling a pressure fluid, said control valve comprising:
(a) a valve housing (10) comprising a valve inlet (P) for the pressure fluid, a control port (A, B) for connecting to an assembly which is to be operated using the pressure fluid, and a valve outlet (T_{A}, T_{B});
(b) a valve piston (20) which can be moved in the valve housing (10) along an axis (R) and which comprises a hollow space (21) through which the pressure fluid can flow from the valve inlet (P) to the control port (A, B);
(c) and a filter device (30) which is arranged in the control valve and comprises a filter cross-section (35) which filters the pressure fluid as it passes through it,
(d) at least a part of the filter cross-section (35) of the filter device (30) being situated in the hollow space (21) of the valve piston (20),
**characterised in that**
(e) the filter device (30) is supported on the valve housing (10) and protrudes into the valve piston (20).

2. The control valve according to the preceding claim, **characterised in that** the filter device (30) comprises a filter enclosing structure (31, 32) which extends in the hollow space (21) of the valve piston (20) and surrounds an internal space (33) of the filter device, and a filter inlet (34) into the internal space (33) of the filter device, and **in that** the filter cross-section (35) forms at least a part, preferably at least a predominant part, of the enclosing area of the filter enclosing structure (31, 32) which surrounds the internal space (33) of the filter device, such that the pressure fluid can flow through the filter inlet (34) into the internal space (33) of the filter device and from the internal space of the filter device through the filter cross-section (35) to the control port (A, B).

3. The control valve according to the preceding claim, **characterised in that** the filter enclosing structure (31, 32) comprises an axially extending casing (31) and a base (32) which is axially spaced from the filter inlet (34), and **in that** the filter cross-section (35) forms at least a part, preferably at least a predominant part, of the area of the base (32) or a part, preferably at least a predominant part, of the area of the casing (31) between the filter inlet (34) and the base (32).

4. The control valve according to any one of the preceding claims, **characterised in that** an axial filter opening of the filter device (30), which preferably lies at an axial end of the filter device (30), forms the filter inlet (34), such that the pressure fluid can flow axially into the filter device (30).

5. The control valve according to any one of the preceding claims, **characterised in that**:
the valve piston (20) can be moved counter to the restoring force of a valve spring (14);
the filter device (30) comprises a supporting structure (36) via which the filter device (30) is supported, preferably axially, on the valve housing (10) or the valve piston (20); and the valve spring (14) is supported on the supporting structure (36).

6. The control valve according to any one of the preceding claims, **characterised in that** an axial housing opening of the valve housing (10; 10, 44), which preferably lies at an axial end of the valve housing (10), forms the valve inlet (P), such that the pressure fluid can be axially fed to the control valve, and the valve piston (20) preferably comprises an axial piston inlet (22) through which the pressure fluid can axially flow into the hollow space (21) of the valve piston (20), preferably within the filter device (30).

7. The control valve according to any one of the preceding claims, **characterised in that** the valve piston (20) comprises an axial piston inlet (22) through which the pressure fluid can flow into the hollow space (21), and a feed (24) which connects the hollow space (21) to an axially facing area (F₂₈) of the valve piston (20) which axially faces away from the piston inlet (22), and **in that** in preferred embodiments, this axially facing area (F₂₈) is connected to the second partial space of the preceding claim via the feed (24).

8. The control valve according to any one of the preceding claims, **characterised in that** a filter material which forms the filter cross-section (35) is a fabric, a mesh, a fleece, an open-pored foam material or an open-pored sintered material or is formed from a combination of at least two of these materials.

9. The control valve according to any one of the preceding claims, **characterised in that** a blocking member (40) which serves to prevent the pressure fluid from flowing back from the control port (A, B) to the valve inlet (P) is a constituent of the control valve.

10. The control valve according to the preceding claim, **characterised in that** a supporting structure (36) of the filter device (30) is fixedly connected to or formed in one piece with a supporting structure (44) of the blocking member (40), or one of the supporting structures (36, 44) is axially supported on the other in a pressure contact.

11. The control valve according to any one of Claims 9 and 10 and one of the following features:
(i) the blocking member (40) is arranged upstream of the filter device (30) between the valve inlet (P) and the filter device (30);
(ii) the blocking member (40) is arranged in a filter enclosing structure (31, 32) of the filter device (30) which comprises at least a part of the filter cross-section (35);
(iii) the filter device (30) and the blocking member (40) are combined to form a design unit which is arranged as a unit in the control valve.

12. The control valve according to any one of Claims 9 to 11, **characterised in that** the blocking member (40) comprises a blocking body (41), a blocking body seat (42) and a spring (43) which presses the blocking body (41) into the blocking body seat (42), wherein the valve housing (10) preferably forms the blocking body seat (42) directly.

13. The control valve according to any one of Claims 9 to 11, **characterised in that** the blocking member (40) comprises one or more blocking elements (47) which overlap(s) the filter cross-section (35), and **in that** the blocking element or elements (47) can be moved out of the overlap with the filter cross-section (35), preferably elastically bent away, counter to an elastic restoring force.

14. The control valve according to any one of the preceding claims, **characterised in that**:
(i) the control valve comprises a valve spring (14) which acts axially on the valve piston (20);
(ii) the filter device (30) or the blocking member (40) according to any one of Claims 9 to 13 comprises or respectively comprise a supporting structure (36; 44) comprising a flange;
(iii) the supporting structure (36; 44) is axially supported on a support of the valve housing (10);
(iv) and the flange comprises a number of contact elements (36a) on an axially facing area which axially faces the support,
(v) wherein the contact elements (36a) are axial projections or are pressed flat and are pressed against the axial support by the valve spring (14).

15. The control valve according to any one of the preceding claims, **characterised in that** the control valve (10, 20) is arranged centrally in relation to the arrangement consisting of the stator (3) and the rotor (7), and **in that** in preferred embodiments, the valve housing (10) comprises a connecting portion (12) for a connection, fixed in terms of torque, between the rotor (7) and the cam shaft (1).

16. A phase setter for adjusting the rotational angular position of a cam shaft relative to a crankshaft of a combustion engine, said phase setter comprising:
(a) a stator (3) which can be rotary-driven by the crankshaft;
(b) a rotor (7) which can be rotary-driven about a rotational axis (R) by the stator (3) and can be coupled to the cam shaft (1) in order to rotary-drive it, and which forms setting chambers (8, 9) with the stator (3) which can be charged with a pressure fluid in order to be able to adjust the rotor (7) relative to the stator (3) about the rotational axis (R);
(c) and a control valve according to any one of Claims 1 to 15, which comprises control ports (A, B) which are connected to the setting chambers (8, 9),
(d) wherein the valve housing (10) preferably extends axially in the rotor (7).

## Revendications

1. Soupape de commande pour commander un fluide sous pression, la soupape de commande comportant :
(a) un boîtier de soupape (10) ayant une entrée de soupape (P) pour le fluide sous pression, un orifice de commande (A, B) pour un raccordement à un ensemble devant fonctionner avec le fluide sous pression et une sortie de soupape (T_{A}, T_{B}),
(b) un piston de soupape (20) mobile dans le boîtier de soupape (10) le long d'un axe (R), ayant un espace creux (21) à travers lequel le fluide sous pression peut s'écouler depuis l'entrée de soupape (P) jusqu'à l'orifice de commande (A, B),
(c) et un dispositif de filtre (30) agencé dans la soupape de commande, ayant une section transversale de filtre (35) qui filtre le fluide sous pression lorsqu'il la traverse,
(d) le dispositif de filtre (30) ayant au moins une partie de la section transversale de filtre (35) se situe dans l'espace creux (21) du piston de soupape (20), **caractérisée en ce que**
(e) le dispositif de filtre (30) est supporté par le boîtier de soupape (10) et fait saillie dans le piston de soupape (20).

2. Soupape de commande selon la revendication précédente, **caractérisée en ce que** le dispositif de filtre (30) comporte une structure d'enveloppe de filtre (31, 32) s'étendant dans l'espace creux (21) du piston de soupape (20) et entourant un espace intérieur de filtre (33), et une entrée de filtre (34) dans l'espace intérieur de filtre (33), et la section transversale de filtre (35) forme au moins une partie, de préférence au moins une partie prépondérante de la surface d'enveloppe de la structure d'enveloppe de filtre (31, 32) entourant l'espace intérieur de filtre (33), de telle sorte que le fluide sous pression peut s'écouler à travers l'entrée de filtre (34) dans l'espace intérieur de filtre (33) et hors de l'espace intérieur de filtre à travers la section transversale de filtre (35) jusqu'à l'orifice de commande (A, B).

3. Soupape de commande selon la revendication précédente, **caractérisée en ce que** la structure d'enveloppe de filtre (31, 32) comporte une gaine s'étendant axialement (31) et un corps (32) axialement éloigné de l'entrée de filtre (34) et la section transversale de filtre (35) forme au moins une partie, de préférence au moins une partie prépondérante, de la surface du corps (32) ou forme entre l'entrée de filtre (34) et le corps (32) au moins une partie, de préférence au moins une partie prépondérante, de la surface de la gaine (31).

4. Soupape de commande selon l'une des revendications précédentes, **caractérisée en ce qu'**une ouverture de filtre axiale du dispositif de filtre (30), qui se situe de préférence à une extrémité axiale du dispositif de filtre (30), forme l'entrée de filtre (34) de telle sorte que le fluide sous pression peut s'écouler axialement dans le dispositif de filtre (30).

5. Soupape de commande selon l'une des revendications précédentes, **caractérisée en ce que** le piston de soupape (20) peut être déplacé à l'encontre de la force de rappel d'un ressort de soupape (14), le dispositif de filtre (30) comporte une structure de support (36) au moyen de laquelle le dispositif de filtre (30) est supporté, de préférence axialement, par le boîtier de soupape (10) ou le piston de soupape (20), et le ressort de soupape (14) est supporté par la structure de support (36).

6. Soupape de commande selon l'une des revendications précédentes, **caractérisée en ce qu'**une ouverture de boîtier axiale du boîtier de soupape (10 ; 10, 44), qui se situe de préférence à une extrémité axiale du boîtier de soupape (10), forme l'entrée de soupape (P), de telle sorte que le fluide sous pression peut être axialement transféré à la soupape de commande, et le piston de soupape (20) comporte de préférence une entrée de piston axiale (22), à travers laquelle le fluide sous pression peut axialement s'écouler dans l'espace creux (21) du piston de soupape (20), de préférence à l'intérieur du dispositif de filtre (30).

7. Soupape de commande selon l'une des revendications précédentes, **caractérisée en ce que** le piston de soupape (20) comporte une entrée de piston axiale (22), à travers laquelle le fluide sous pression peut s'écouler dans l'espace creux (21), ainsi qu'une alimentation (24) qui relie l'espace creux (21) à une surface frontale (F₂₈) du piston de commande (20) axialement opposée à l'entrée de piston (22), et dans des mises en oeuvre préférées, cette surface frontale (F₂₈) est reliée au second espace partiel de la revendication précédente par l'intermédiaire de l'alimentation (24).

8. Soupape de commande selon l'une des revendications précédentes, **caractérisée en ce qu'**un matériau de filtre formant une section transversale de filtre (35) est formé par un tissu, un treillis, un tissé, une mousse à pores ouverts ou un matériau fritté à pores ouverts, ou à partir d'une combinaison d'au moins deux de ces matériaux.

9. Soupape de commande selon l'une des revendications précédentes, **caractérisée en ce qu'**un organe de blocage (40), qui sert à empêcher un reflux du fluide sous pression de l'orifice de commande (A, B) vers l'entrée de soupape (P), est un composant de la soupape de commande.

10. Soupape de commande selon la revendication précédente, **caractérisée en ce qu'**une structure de support (36) du dispositif de filtre (30) est fixement reliée à une structure de support (44) de l'organe de blocage (40), ou est formée en une seule pièce, ou l'une des structures de support (36, 44) est axialement supportée par l'autre dans un contact sous pression.

11. Soupape de commande selon l'une des revendications 9 et 10 et présentant l'une des caractéristiques suivantes :
(i) l'organe de blocage (40) est agencé en amont du dispositif de filtre (30) entre l'entrée de soupape (P) et le dispositif de filtre (30),
(ii) l'organe de blocage (40) est agencé dans une structure d'enveloppe de filtre (31, 32) du dispositif de filtre (30) comportant au moins une partie de la section transversale de filtre (35),
(iii) le dispositif de filtre (30) et l'organe de blocage (40) sont regroupés en une seule unité dans le sous-ensemble agencé dans la soupape de commande.

12. Soupape de commande selon l'une des revendications 9 à 11, **caractérisée en ce que** l'organe de blocage (40) comporte un corps de blocage (41), un siège de corps de blocage (42) et un ressort (43) qui presse le corps de blocage (41) dans le siège de corps de blocage (42), dans laquelle le boîtier de soupape (10) forme de préférence directement le siège de corps de blocage (42).

13. Soupape de commande selon l'une des revendications 9 à 11, **caractérisée en ce que** l'organe de blocage (40) inclut un ou plusieurs éléments de blocage (47) qui recouvre ou recouvrent la section transversale de filtre (35), et l'élément ou les éléments de blocage (47) peut ou peuvent être déplacés à l'encontre d'une force de rappel élastique pour supprimer le recouvrement avec la section transversale de filtre (35), de préférence peut ou peuvent être pliés élastiquement.

14. Soupape de commande selon l'une des revendications précédentes, **caractérisée en ce que**
(i) la soupape de commande comporte un ressort de soupape (14) agissant axialement sur le piston de soupape (20),
(ii) le dispositif de filtre (30) ou l'organe de blocage (40) selon l'une des revendications 9 à 13 comporte ou comportent respectivement une structure de support (36 ; 44) avec une bride,
(iii) la structure de support (36 ; 44) est axialement supportée par un support du boîtier de soupape (10),
(iv) et la bride comporte plusieurs éléments de contact (36a) sur une surface frontale axialement opposée au support,
(v) dans laquelle les éléments de contact (36a) sont des saillies axiales ou sont pressés à plat et sont pressés par le ressort de soupape (14) contre le support axial.

15. Soupape de commande selon l'une des revendications précédentes, **caractérisée en ce que** la soupape de commande (10, 20) est agencée centralement par rapport à l'agencement constitué du stator (3) et du rotor (7), et dans des mises en oeuvre préférées, le boîtier de soupape (10) comporte une partie de liaison (12) pour une liaison fixe, en termes de couple, du rotor (7) et d'un arbre à cames (1).

16. Déphaseur pour régler la position angulaire de rotation d'un arbre à cames par rapport à un vilebrequin d'un moteur à combustion interne, le déphaseur incluant :
(a) un stator (3) pouvant être entraîné en rotation par le vilebrequin,
(b) un rotor (7) pouvant être entraîné en rotation par le stator (3) autour d'un axe de rotation (R) et pouvant être couplé à celui-ci afin d'entraîner en rotation l'arbre à cames (1), lequel rotor forme des chambres de réglage (8, 9) avec le stator (3), qui peuvent être soumises à un fluide sous pression afin de pouvoir régler le rotor (7) par rapport au stator (3) autour de l'axe de rotation (R),
(c) et une soupape de commande selon l'une des revendications 1 à 15 qui comporte des orifices de commande (A, B) reliés aux chambres de réglage (8, 9),
(d) dans lequel le boîtier de soupape (10) s'étend de préférence axialement dans le rotor (7).
